# EUROPEAN PATENT APPLICATION

(11) **EP 4 386 940 A1**
(43) Date of publication of application: **19.06.2024**
(21) Application number: 22956682.3
(22) Date of filing: 31.10.2022
(51) Int. Cl.: H01M 10/613, H01M 50/30

(54) **BATTERY AND ELECTRIC DEVICE**

(71) Applicant: Contemporary Amperex Technology Co., Limited, Ningde City, Fujian 352100 (CN)
(72) Inventor: YANG, Piaopiao, Ningde City, Fujian 352100 (CN); LI, Yao, Ningde City, Fujian 352100 (CN); QIAN, Ou, Ningde City, Fujian 352100 (CN); CHEN, Xiaobo, Ningde City, Fujian 352100 (CN)
(74) Representative: Gong, Jinping
(86) International application number: PCT/CN2022/128750
(87) International publication number: WO 2024/092445

(57) **Abstract**

Embodiments of the present application provide a battery and an electrical device. The battery comprises: a battery cell, a first wall of the battery cell being provided with a first pressure relief mechanism; a thermal management component for regulating the temperature of the battery cell, wherein the thermal management component is attached to a second wall of the battery cell, the second wall being different from the first wall and the area of the second wall being greater than or equal to that of the first wall; and a discharge pathway configured to be capable of getting in communication with the interior of the battery cell via the first pressure relief mechanism when the first pressure relief mechanism is actuated, so that emissions of the battery cell are discharged to the discharge pathway. The battery and the electrical device of embodiments of the present application can improve the safety of the battery.

## Description

### TECHNICAL FIELD

The present application relates to the technical field of batteries, and in particular, to a battery and an electrical device.

### BACKGROUND

Energy saving and emission reduction are the key to the sustainable development of the automobile industry. In such a situation, electric vehicles have become an important part of the sustainable development of the automobile industry due to their advantages of energy saving and environmental protection. For electric vehicles, the battery technology is an important factor related to their development.

In the development of the battery technology, in addition to improving the performance of the battery, the safety problem is also an issue that cannot be ignored. If the safety of a battery cannot be guaranteed, the battery cannot be used. Therefore, how to enhance the safety of the battery is a technical problem urgently to be solved in the battery technology.

### SUMMARY OF THE INVENTION

Embodiments of the present application provide a battery and an electrical device, which can improve the safety of the battery.

In a first aspect, a battery is provided. The battery comprises: a battery cell, a first wall of the battery cell being provided with a first pressure relief mechanism; a thermal management component for regulating the temperature of the battery cell, wherein the thermal management component is attached to a second wall of the battery cell, the second wall being different from the first wall and the area of the second wall being greater than or equal to that of the first wall; and a discharge pathway configured to be capable of getting in communication with the interior of the battery cell via the first pressure relief mechanism when the first pressure relief mechanism is actuated, so that emissions of the battery cell are discharged to the discharge pathway.

In embodiments of the present application, the thermal management component is attached to the second wall of the battery cell that is not provided with the first pressure relief mechanism, and the contact area between the thermal management component and the battery cell is large, so that the effect of temperature regulation of the battery cell is remarkable under the normal operation of the battery cell. In addition, since the second wall to which the thermal management component is attached is not the first wall of the battery cell that is provided with the first pressure relief mechanism, when the battery cell is subjected to thermal runaway, emissions of the battery cell that are discharged through the first pressure relief mechanism will be discharged towards a direction away from the thermal management component, so that the emissions are less likely to break through the thermal management component, and the thermal management component can cool down the battery cell that is suffering from thermal runaway, thus avoiding thermal diffusion and enhancing the safety of the battery.

In addition, the battery further includes a discharge pathway, wherein the discharge pathway can be in communication with the interior of the battery cell through the first pressure relief mechanism when the first pressure relief mechanism is actuated, so that emissions inside the battery cell can be discharged to the discharge pathway through the first pressure relief mechanism, so as to avoid thermal diffusion caused by the accumulation of emissions inside the battery cell, thereby improving the safety of the battery.

In some embodiments, the battery further includes: a box body, wherein the box body includes an electrical cavity, the electrical cavity being used for accommodating the battery cell and the thermal management component. The electrical cavity of the box body of embodiments of the present application is used to accommodate at least one battery cell and at least one thermal management component, which means that the electrical cavity provides a mounting space for the battery cell and the thermal management component, thus improving the integration of the battery.

In some embodiments, the discharge pathway comprises a first pathway, the first pathway being used to discharge emissions discharged from the first pressure relief mechanism to the electrical cavity. Since the battery cell is provided in the electrical cavity, the emissions discharged through the first pressure relief mechanism for the battery cell are discharged through the first pathway directly to the electrical cavity where the battery cell is located, then the emissions can be discharged from the electrical cavity without the need to additionally provide other structures, which makes the structure of the box body simpler and easier to realize.

In some embodiments, the electrical cavity includes a third wall opposite to the first wall, at least part of the first pathway being disposed between the first wall and the third wall. The first wall of the battery cell being provided with the first pressure relief mechanism and the first pathway being provided between the first wall and the third wall can cause the emissions discharged through the first pressure relief mechanism to directly enter into the first pathway, so that the purpose of directional discharging of the emissions can be achieved through the provision of the first pathway, which avoids the influence of the emissions on other components in the electrical cavity, thus improving the safety of the battery.

In some embodiments, the battery further includes: a first support member, the first support member being provided between the first wall and the third wall, and the first support member being used to form at least part of the first pathway.

On the one hand, this first support member is between the first wall and the third wall, and can function to provide support, so as to enable the third wall to have a better anti-pressure strength. When an external pressure acts on the battery, this first support member provided can resist most or even all of the external pressure, thereby reducing or eliminating the influence of the external pressure on components such as battery cells and thermal management components in the electrical cavity, thus enhancing the anti-pressure performance and safety performance of the battery. On the other hand, the first support member can also be used to form at least part of the first pathway for emissions of the battery cell to pass through, so that the emissions pass through the first pathway, thus realizing directional discharging.

In some embodiments, the first support member is provided in correspondence with a region of the first wall other than the first pressure relief mechanism, so as to form at least part of the first pathway outside of the first support member. The first support member is provided in correspondence with the region of the first wall other than the first pressure relief mechanism, then emissions discharged through the first pressure relief mechanism is outside of the first support member, thereby forming at least part of the first pathway outside of the first support member. As an example, at least part of the first pathway may be formed between multiple first support members or between the first support member and the wall of the electrical cavity, so that the emissions are directionally discharged.

In some embodiments, the first support member abuts against the region of the first wall other than the first pressure relief mechanism. The first support member can abut against the region of the first wall other than the first pressure relief mechanism, so as to ensure that the first support member functions to provide good support to the first wall.

In some embodiments, the battery includes multiple said first support members provided at intervals, at least part of the first pathway being formed between the multiple said first support members. Since the battery usually includes multiple battery cells, multiple first support members can be correspondingly provided at intervals between the first wall and the third wall of the multiple battery cells, so that at least part of the first pathway can be formed between the multiple first support members, and the emissions can be discharged to between the multiple first support members after being discharged through the first pressure relief mechanism, so as to realize directional discharging.

In some embodiments, the first support member is provided with a first open hole, the first open hole being provided in correspondence with the first pressure relief mechanism so that emissions passing through the first pressure relief mechanism are discharged through the first open hole. In this way, the emissions of the battery cell are discharged through the first pressure relief mechanism and enter the first open hole, and the directional discharging of the emissions can be realized by reasonably arranging the position of the first open hole.

In some embodiments, the first support member is of a hollow structure, and the first pressure relief mechanism is in communication with the interior of the first support member through the first open hole, so as to form at least part of the first pathway inside the first support member.

The first open hole is provided opposite to the first pressure relief mechanism and does not hinder the actuation of the first pressure relief mechanism. In this way, while the first support member fulfills the support function, the first open hole of the first support member also facilitates the reception of emissions of the battery cell that are discharged via the first pressure relief mechanism, and the emissions can be collected to the interior of the first support member after passing through the first open hole, so that the emissions can be directionally discharged, thereby preventing emissions from affecting the components in the electrical cavity.

In some embodiments, the cross-sectional area of the first open hole is not smaller than the area of the first pressure relief mechanism, so as to further enhance the good passage effect of the first open hole on emissions and avoid blockage by the first open hole of the emissions discharged from the first pressure relief mechanism from entering the first pathway.

In some embodiments, the first support member abuts against the first wall and/or the third wall. In this way, the first support member can function to provide support for the first wall and/or the third wall to improve the overall anti-pressure strength of the first wall and/or the third wall, and in particular when the first support member abuts against the first wall and the third wall at the same time, it can increase the overall anti-pressure strength of the first wall and the third wall at the same time, thereby preventing the external pressure from affecting components such as battery cells in the electrical cavity.

In some embodiments, a connecting face of the first support member abuts against the first wall and/or the third wall, and a non-connecting face of the first support member is provided with a second open hole, so as to form at least part of the first pathway outside the first support member, thereby increasing the discharge path for the emissions through the battery cell.

In some embodiments, there is a gap between the first wall and the third wall, the gap being used to form at least part of the first pathway, which can reduce the requirement for sealing of the electrical cavity and, in particular, can reduce the requirement for sealing between the first wall and the third wall, thereby reducing the machining difficulty of the battery and improving the efficiency of machining the battery.

In some embodiments, the third wall and/or a fourth wall are/is provided with a second pressure relief mechanism, the second pressure relief mechanism being used to discharge emissions passing through the first pathway out of the electrical cavity, and the fourth wall being a wall of the electrical cavity that intersects with the third wall.

The first pathway is disposed between the first wall and the third wall. If the second pressure relief mechanism is provided on the third wall, the emissions in the first pathway can be discharged from the electrical cavity in a timely manner, so as to avoid thermal diffusion caused by the accumulation of the emissions in the electrical cavity, thereby improving the safety of the battery. If the second pressure relief mechanism is provided on the fourth wall, this second pressure relief mechanism is close to the end portion of the first pathway, which can likewise achieve the purpose of quickly discharging the emissions, so as to avoid thermal diffusion caused by the accumulation of the emissions in the electrical cavity, thereby improving the safety of the battery.

In some embodiments, the discharge pathway comprises a second pathway, the second pathway being used to discharge emissions discharged from the first pressure relief mechanism out of the electrical cavity. The emissions discharged through the first pressure relief mechanism of the battery cell are discharged out of the electrical cavity through the second pathway, and the emissions do not affect the battery cell in the electrical cavity, which can effectively avoid thermal diffusion as well as short-circuiting of the battery cell caused by the emissions, thus improving the safety of the battery. Moreover, through this second pathway, the emissions of the battery cell can be collected centrally to avoid the influence of emissions on other components.

In some embodiments, the box body further includes: a collection cavity, the collection cavity being used to collect emissions from the battery cell through the second pathway when the first pressure relief mechanism is actuated. This collection cavity collects and/or processes emissions discharged through the first pressure relief mechanism when the pressure relief mechanism is actuated. As an example, it can be used to collect emissions discharged through the second pathway when the first pressure relief mechanism is actuated, and the collection cavity can cool down the emissions and can also discharge the emissions to the outside of the battery.

In some embodiments, the electrical cavity includes a third wall opposite to the first wall, the third wall being of a hollow structure so that the interior of the third wall forms at least part of the collection cavity. By forming at least part of the collection cavity in the interior of the third wall, since the third wall is of an integral structure, the structure of the box body can be simplified, thus facilitating mounting and improving the efficiency of machining the battery.

In some embodiments, a first sub-wall of the third wall that faces the first wall is provided with a first pressure relief region, the first pressure relief region being provided opposite to the first pressure relief mechanism, and the first pressure relief region being used to form at least part of the second pathway. The first pressure relief region is used to cause emissions passing through the first pressure relief mechanism to be discharged to the interior of the third wall, i.e., into the collection cavity, via the first pressure relief region when the first pressure relief mechanism is actuated, thereby avoiding damage of the emissions to other battery cells in the electrical cavity, avoiding thermal diffusion, and improving the safety of the battery.

In some embodiments, the first pressure relief region is a first through hole penetrating through the thickness direction of the first sub-wall, and the second pathway includes the first through hole. The first pressure relief region being provided as a first through hole, on the one hand, facilitates machining, and on the other hand, the first through hole can provide a deformation space for actuation of the first pressure relief mechanism, and when the first pressure relief mechanism is actuated, the emissions are rapidly discharged to the collection cavity inside the third wall, so as to improve the efficiency of discharging the emissions, thereby improving the safety of the battery.

In some embodiments, the first pressure relief region is a first weak region on the first sub-wall, the first weak region being used to be broken when the first pressure relief mechanism is actuated, so as to form at least part of the second pathway.

When the first pressure relief mechanism is not actuated, for example, during normal use of the battery, the first weak region can cause the third wall to be in a relatively sealed state, which can effectively protect the first pressure relief mechanism from failure due to damage by external forces. Moreover, when the first pressure relief mechanism is actuated, the strength of the first weak region is smaller than the strength at other regions of the first sub-wall other than the first pressure relief region, so it is easy for the first weak region to be broken so that emissions from the battery cell provided with the first pressure relief mechanism pass through the first weak region and are discharged out of the electrical cavity, e.g., pass through the first weak region into the collection cavity inside the third wall.

In some embodiments, a second sub-wall of the third wall is provided with a third pressure relief mechanism, the third pressure relief mechanism being used to discharge emissions passing through the second pathway out of the collection cavity, and the second sub-wall being different from the first sub-wall.

When the internal pressure or temperature of the collection cavity inside the third wall reaches a threshold, the third pressure relief mechanism is actuated to relieve the internal pressure or temperature of the collection cavity, and then discharge the emissions in the collection cavity out of the box body in a timely manner; and the second sub-wall is different from the first sub-wall, so that the emissions will not enter the electrical cavity through the third pressure relief mechanism again, which avoids the influence on components inside the electrical cavity, thus improving the safety of the battery.

In some embodiments, the electrical cavity includes a fourth wall intersecting with the third wall, the fourth wall being of a hollow structure and being in communication with the interior of the third wall so that the interior of the third wall and the interior of the fourth wall form at least part of the collection cavity. This can extend the range of the collection cavity and also the range of the second pathway, thereby enabling the collection cavity to accommodate more emissions and also facilitating cooling of the internal emissions, so as to improve the efficiency of discharging the emissions, thus improving the safety of the battery.

In some embodiments, the battery further includes: an isolation component attached to the first wall, the isolation component being used to isolate the electrical cavity from the collection cavity. The isolation component is used to isolate the electrical cavity from the collection cavity. In other words, the electrical cavity for accommodating the battery cells and thermal management components and the collection cavity for collecting emissions are spatially separated from each other to avoid mutual influence between the two.

In some embodiments, the isolation component is provided with a second pressure relief region, the second pressure relief region being used to form at least part of the second pathway. When the first pressure relief mechanism of the battery cell is actuated, the emissions discharged through the first pressure relief mechanism can pass through the second pressure relief region and enter the collection cavity, thereby avoiding damage of the emissions to other battery cells in the electrical cavity, avoiding thermal diffusion, and improving the safety of the battery.

In some embodiments, the second pressure relief region is a second through hole penetrating through the thickness direction of the isolation component, and the second pathway includes the second through hole. The second pressure relief region being provided as a second through hole, on the one hand, facilitates machining, and on the other hand, the second through hole can provide a deformation space for actuation of the second pressure relief region, and when the first pressure relief mechanism is actuated, the emissions are rapidly discharged to the collection cavity through the second through hole, so as to improve the efficiency of discharging the emissions, thereby improving the safety of the battery.

In some embodiments, the second pressure relief region is a second weak region, the second weak region being used to be broken when the first pressure relief mechanism is actuated, so as to form at least part of the second pathway. In this way, when the first pressure relief mechanism is not actuated, for example, during normal use of the battery, the second weak region can cause the collection cavity to be in a relatively sealed state, which can effectively protect the first pressure relief mechanism from failure due to damage by external forces. Moreover, when the first pressure relief mechanism is actuated, the strength of the second weak region is smaller than the strength at other regions of the isolation component other than the second pressure relief region, so that the second weak region is susceptible to being broken to allow emissions from the battery cell provided with the first pressure relief mechanism to pass through the second weak region and to be discharged out of the electrical cavity, e.g., pass through the second weak region into the collection cavity.

In some embodiments, the battery further includes: a second support member provided in the collection cavity, the second support member being used to improve the anti-pressure strength of the collection cavity. The second support member is provided in the collection cavity, and compared to the collection cavity of the hollow cavity structure, the collection cavity provided with the second support member has a better anti-pressure strength because the second support member functions to provide support in the collection cavity. In other words, when an external pressure acts on the battery, the collection cavity provided with the second support member can resist most or even all of the external pressure, thereby reducing or eliminating the influence of the external pressure on components such as battery cells and thermal management components in the electrical cavity, thus enhancing the anti-pressure performance and safety performance of the battery.

In some embodiments, the second support member is provided in correspondence with a region of the isolation component other than the second pressure relief region, so as to form at least part of the second pathway outside the second support member. The second support member being provided in correspondence with the region of the isolation component other than the second pressure relief region avoids the influence of the second support member on the first pressure relief mechanism and the second pressure relief region. As an example, this can avoid blockage by the second support member of emissions from the inside of the battery cell that are discharged via the first pressure relief mechanism and the second pressure relief region, allowing them to be discharged from the electrical cavity in a timely manner and collected by the collection cavity. Therefore, the second support member provided based on embodiments of the present application will not affect the safety performance of the battery cell while improving the anti-pressure strength of the collection cavity.

In some embodiments, the second support member abuts against the region of the isolation component other than the second pressure relief region to ensure that the second support member functions to provide good support to the collection cavity.

In some embodiments, the second support member is provided with a third open hole, the third open hole being provided in correspondence with the second pressure relief region so that emissions passing through the second pressure relief region are discharged through the third open hole. The emissions of the battery cell are discharged through the first pressure relief mechanism and the second pressure relief region and enter the third open hole, and the directional discharging of the emissions can be realized by reasonably arranging the position of the third open hole.

In some embodiments, the second support member is of a hollow structure, and the second pressure relief region is in communication with the interior of the second support member through the third open hole, so as to form at least part of the second pathway inside the second support member.

The third open hole is provided opposite to the first pressure relief mechanism and is also provided opposite to the second pressure relief region, and will not hinder the actuation of the first pressure relief mechanism, nor will it hinder the passage of the emissions through the second pressure relief region. In this way, while the second support member fulfills the support function, the third open hole of the second support member also facilitates the reception of emissions of the battery cell that are discharged sequentially via the first pressure relief mechanism and the second pressure relief region, and the emissions can be collected to the interior of the second support member after passing through the third open hole, and the third open hole and the second support member can be used for at least part of the second pathway, so that the emissions can be directionally discharged, thereby preventing emissions from affecting the components in the electrical cavity.

In some embodiments, the cross-sectional area of the third open hole is not smaller than the area of the second pressure relief region, so as to further enhance the good passage effect of the third open hole on emissions and avoid blockage by the third open hole of the emissions discharged from the second pressure relief region from entering the second pathway.

In some embodiments, the box body further includes: a protective member, wherein the protective member is used to form the collection cavity with the isolation component, and the protective member can also be used to protect the isolation component.

In some embodiments, the second support member abuts against the isolation component and/or the protective member. In this way, the second support member can function to provide support for the isolation component and/or the protective member to improve the overall anti-pressure strength of the isolation component and/or the protective member, and in particular when the second support member abuts against the isolation component and/or the protective member at the same time, it can improve the overall anti-pressure strength of the isolation component and/or the protective member at the same time to prevent the external pressure from affecting the collection cavity, and can also prevent the external pressure from affecting components such as battery cells in the electrical cavity.

In some embodiments, a connecting face of the second support member abuts against the isolation component and/or the protective member, and a non-connecting face of the second support member is provided with a fourth open hole, so as to form at least part of the second pathway outside the second support member, thereby increasing the discharge path for the emissions through the battery cell.

In some embodiments, the electrical cavity includes a fourth wall intersecting with the isolation component, the fourth wall being of a hollow structure so that the interior of the fourth wall forms at least part of the collection cavity. The interior of the fourth wall is in communication with the collection cavity between the isolation component and the protective member, which extends the range of the collection cavity and also the range of the second pathway, thereby enabling the collection cavity to accommodate more emissions and also facilitating cooling of the internal emissions, so as to improve the efficiency of discharging the emissions, thus improving the safety of the battery.

In some embodiments, a third sub-wall of the fourth wall that is far away from the electrical cavity is provided with a fourth pressure relief mechanism, the fourth pressure relief mechanism being used to discharge emissions passing through the second pathway out of the collection cavity. When the internal pressure or temperature of the collection cavity reaches a threshold value, the fourth pressure relief mechanism provided on the third sub-wall is actuated to relieve the internal pressure or temperature of the collection cavity, and then discharge the emissions in the collection cavity out of the box body in a timely manner, wherein the third sub-wall is a wall of the fourth wall far away from the electrical cavity. Moreover, since the third sub-wall is far away from the electrical cavity, the emissions will not enter the electrical cavity again through the fourth pressure relief mechanism, thus avoiding the influence on the components inside the electrical cavity and improving the safety of the battery.

In some embodiments, the second wall is a wall of the battery cell that has the largest area, so as to increase the contact area between the thermal management component and the battery cell for better regulation of the temperature of the battery cell, thus improving the efficiency of warming up or cooling down.

In some embodiments, the battery includes multiple rows of battery cells arranged along a first direction, each row of battery cells of the multiple rows of battery cells including at least one said battery cell arranged along a second direction, with the first direction being perpendicular to the second direction and the second wall. Arranging the multiple battery cells inside the battery in an array manner facilitates assembly of the battery and can also improve the utilization of space of the multiple battery cells inside the battery.

In some embodiments, the thermal management component is attached to the second wall of at least one said battery cell of at least one row of battery cells of the multiple rows of battery cells. In this way, there exists at least one thermal management component in the battery, and each thermal management component can regulate the temperature for at least one battery cell.

In some embodiments, the battery cell includes two said second walls provided opposite to each other along the first direction, and at least one row of battery cells of the multiple rows of battery cells is provided, at two sides along the first direction, respectively with the thermal management components attached to two said second walls of at least one said battery cell. Thus, by the existence of two thermal management components in the battery, the temperature can be regulated for the row of battery cells simultaneously, which can improve the efficiency of temperature regulation and improve the safety of the battery.

In some embodiments, one and the same said thermal management component is provided between at least two adjacent rows of battery cells of the multiple rows of battery cells, which is convenient for the machining and assembly of batteries.

In some embodiments, the battery includes multiple thermal management components arranged along the first direction, and by increasing the number of thermal management components, the efficiency of temperature regulation can be improved.

In some embodiments, the multiple said thermal management components are provided at intervals along the first direction, so that at least one battery cell is provided between two adjacent thermal management components, thus avoiding mutual attachment between the multiple thermal management components, which can not only improve the utilization of space of the battery, but also improve the efficiency of temperature regulation.

In some embodiments, the thermal management component is provided with a heat exchange channel accommodating a heat exchange medium, the heat exchange channels of the multiple said thermal management components being in communication with each other. In this way, the multiple thermal management components are in communication with each other. On the one hand, this facilitates management and control, and improves the integration and safety of the battery; and on the other hand, when the temperatures of some of the thermal management components in the battery vary greatly, heat exchange can be realized through the heat exchange channels so as to make the temperature difference between the multiple thermal management components small, thereby improving the efficiency of temperature regulation.

In some embodiments, a ratio D/S of the thickness D of the thermal management component along the first direction to an area proportion S has a range of values of [0.5 mm, 200 mm], the first direction being perpendicular to the second wall, and the area proportion being a ratio of the area of the second wall that is in contact with the thermal management component to the area of the second wall. Preferably, the D/S has a range of values of [1 mm, 100 mm]. If the ratio of the thickness of the thermal management component to the area proportion is set too small, if the area proportion takes a certain value, the thickness of the thermal management component is too small, the thermal management component is difficult to machine, and the strength is too small, so that it is prone to fracture during assembly, thus reducing the efficiency of machining the battery. On the contrary, if the ratio of the thickness of the thermal management component to the area proportion is set too large, on the one hand, the thickness of the thermal management component may be large, then the thermal management component occupies a large space, which reduces the utilization of space of the battery, and also the energy density of the battery, and may also affect the power demand of the battery; and on the other hand, the area proportion may be too small, which means that the contact area between the thermal management component and the second wall of the battery cell is too small, then it will result in a poor efficiency of temperature regulation.

In a second aspect, an electrical device is provided, including: a battery described in the first aspect, the battery being used to provide electrical energy for the electrical device.

In some embodiments, the electrical device is a vehicle, a ship or a spacecraft.

### DESCRIPTION OF DRAWINGS

Fig. 1 is a structural schematic diagram of a vehicle as disclosed in an embodiment of the present application;
Fig. 2 is an exploded structural schematic diagram of a battery disclosed in an embodiment of the present application;
Fig. 3 is a cross-sectional schematic diagram of a battery disclosed in an embodiment of the present application;
Fig. 4 is an exploded structural schematic diagram of a battery cell disclosed in an embodiment of the present application;
Fig. 5 is a partial cross-sectional schematic diagram of a battery disclosed in an embodiment of the present application;
Fig. 6 is another partial cross-sectional schematic diagram of a battery disclosed in an embodiment of the present application;
Fig. 7 is an exploded structural schematic diagram of another battery disclosed in an embodiment of the present application;
Fig. 8 is a cross-sectional schematic diagram of another battery disclosed in an embodiment of the present application;
Fig. 9 is a partial cross-sectional schematic diagram of another battery disclosed in an embodiment of the present application;
Fig. 10 is yet another cross-sectional schematic diagram of another battery disclosed in an embodiment of the present application;
Fig. 11 is an exploded structural schematic diagram of yet another battery disclosed in an embodiment of the present application;
Fig. 12 is a cross-sectional schematic diagram of yet another battery disclosed in an embodiment of the present application;
Fig. 13 is a partial cross-sectional schematic diagram of yet another battery disclosed in an embodiment of the present application;
Fig. 14 is another partial cross-sectional schematic diagram of yet another battery disclosed in an embodiment of the present application;
Fig. 15 is yet another partial cross-sectional schematic diagram of yet another battery disclosed in an embodiment of the present application;
Fig. 16 is a partial structural schematic diagram of a battery disclosed in an embodiment of the present application;
Fig. 17 is a structural schematic diagram of multiple battery cells and thermal management components disclosed in an embodiment of the present application; and
Fig. 18 is another partial cross-sectional schematic diagram of a battery disclosed in an embodiment of the present application.

In the accompanying drawings, the accompanying drawings are not drawn to actual scale.

### DETAILED DESCRIPTION

Implementations of the present application will be described in further detail hereinafter in conjunction with the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Perpendicular" does not mean being perpendicular in the strict sense, but within the permissible range of error. "Parallel" does not mean being parallel in the strict sense, but within the permissible range of error.

Orientation words appearing in the following description are all the directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

In the embodiments of the present application, the same reference numerals indicate the same parts and, for the sake of brevity, the detailed description of the same parts is omitted in the different embodiments. It should be understood that the dimensions such as the thickness, length of various components in the embodiments of the present application shown in the accompanying drawings, as well as the dimensions such as the overall thickness, length of the integrated apparatus are illustrative only and shall not constitute any limitation on the present application.

In the present application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in embodiments of the present application. The battery cell may be cylindrical, flat, rectangular, or in other shapes, which is also not limited in the embodiments of the present application. The battery cells are generally divided into three types according to encapsulating manners: cylindrical battery cells, prismatic rectangular battery cells, and pouch cells, which are not limited in the embodiments of the present application.

The battery mentioned in the embodiments of the present application refers to a single physical module including one or more battery cells to provide a higher voltage and capacity. As an example, the battery mentioned in the present application may include a battery module, a battery pack, or the like. The battery generally includes a box body for encapsulating one or more battery cells. The box body can prevent liquids or other foreign matters from affecting the charging or discharging of the battery cells.

The battery cell includes an electrode assembly and an electrolyte solution, the electrode assembly being composed of a positive electrode plate, a negative electrode plate, and a separator. The battery cell works mainly relying on the movement of metal ions between the positive electrode plate and the negative electrode plate. The positive electrode plate includes a positive electrode current collector and a positive electrode active material layer, wherein the positive electrode active material layer is coated on a surface of the positive electrode current collector. Current collectors not coated with the positive electrode active material layer protrude from current collectors already coated with the positive electrode active material layer, and the current collectors not coated with the positive electrode active material layer serve as a positive electrode tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, wherein the negative electrode active material layer is coated on a surface of the negative electrode current collector. Current collectors not coated with the negative electrode active material layer protrude from current collectors coated with the negative electrode active material layer, and the current collectors not coated with the negative electrode active material layer serve as a negative electrode tab. The material of the negative electrode current collector may be copper, and the negative electrode active material may be carbon, silicon, or the like. In order to ensure that no fusing occurs when a large current passes, there are a plurality of positive electrode tabs which are laminated together, and there are a plurality of negative electrode tabs which are laminated together. The material of the separator may be polypropylene (PP) or polyethylene (PE), or the like. In addition, the electrode assembly may be of a wound structure or a laminated structure, and embodiments of the present application are not limited thereto.

Many design factors, such as energy density, cycle life, discharge capacity, charge-discharge rate and other performance parameters, should be considered in the development of the battery technology. In addition, the safety of the battery also needs to be taken into account.

For battery cells, the main safety hazards come from the charging and discharging processes, as well as appropriate ambient temperature designs. In order to effectively avoid unnecessary losses, there are generally at least threefold protection measures for battery cells. Specifically, the protection measures include at least switch elements, selection of an appropriate separator material, as well as pressure relief mechanisms. The switch element is an element that enables the battery to stop charging or discharging when the temperature or resistance in the battery cell reaches a certain threshold. The separator film is used to isolate the positive electrode plate and the negative electrode plate, and can automatically dissolve the micron-level (or even nanometer-level) micropores attached to them when the temperature rises to a certain value, so that metal ions cannot pass through the separator, thus terminating the internal reaction of the battery cell.

The pressure relief mechanism refers to an element or component that is actuated to relieve the internal pressure or temperature of a battery cell when the internal pressure or temperature reaches a predetermined threshold. This threshold design varies depending on the design requirements. The threshold may depend on the material of one or more of the positive electrode plate, the negative electrode plate, the electrolyte solution, and the separator in the battery cell. The pressure relief mechanism may take the form of, for example, an explosion-proof valve, an air valve, a pressure relief valve, or a safety valve, and may specifically employ a pressure-sensitive or temperature-sensitive element or construction. That is to say, when the internal pressure or temperature of the battery cell reaches a predetermined threshold, the pressure relief mechanism performs an action, or a weak structure provided in the pressure relief mechanism is broken, so as to form an opening or channel through which the internal pressure or temperature can be relieved.

The term "actuation" referred to in the present application means that the pressure relief mechanism conducts an action or is activated to a certain state, so that the internal pressure and temperature of the battery cell can be relieved. Actions produced by the pressure relief mechanism may include, but are not limited to, at least a part of the pressure relief mechanism being broken, crushed, torn or opened, and the like. When the pressure relief mechanism is actuated, high temperature and high pressure substances inside the battery cell may be discharged outward from the actuated part as emissions. In this manner, it is possible to enable the battery cell to undergo pressure and temperature relief under controllable pressure or temperature, thus avoiding the occurrence of potentially more serious accidents.

The emissions from the battery cell referred to in the present application include, but are not limited to: electrolyte solution, dissolved or split positive and negative electrode plates, separator fragments, high-temperature and high-pressure gases produced from reactions, flames, and the like.

The pressure relief mechanism on the battery cell has an important influence on the safety of the battery. For example, when a short circuit, overcharge, or the like occurs, it may cause thermal runaway inside the battery cell, resulting in a sudden rise in pressure or temperature. In this case, the internal pressure and temperature can be relieved outward through the actuation of the pressure relief mechanism to prevent explosion and fire of the battery cell.

In the assembly scheme of the battery, the thermal management component may be attached to the wall of the battery cell that is provided with the pressure relief mechanism. In this way, the thermal management component can regulate the temperature of the battery cell during normal operation of the battery cell. However, since the pressure relief mechanism is generally provided on the wall of the battery cell that has a smaller area, the effect of temperature regulation of the battery cell is not significant in the case of normal operation of the battery cell. In addition, when thermal runaway occurs in the battery cell, for example, when the pressure relief mechanism of the battery cell is actuated, the power and destructive force of the emissions from the battery cell discharged through the pressure relief mechanism may be so great that it may be sufficient to break through the thermal management component in this direction, thereby causing a safety problem.

In view of the above, the present application provides a battery and an electrical device. The battery includes a battery cell and a thermal management component, wherein a first wall of the battery cell is provided with a first pressure relief mechanism, and the thermal management component is attached to a second wall of the battery cell, the second wall being different from the first wall, and the area of the second wall being greater than or equal to that of the first wall. In this way, the thermal management component is attached to the second wall of the battery cell that is not provided with the first pressure relief mechanism, and the contact area between the thermal management component and the battery cell is large, so that the effect of temperature regulation of the battery cell is remarkable under the normal operation of the battery cell. In addition, since the second wall to which the thermal management component is attached is not the first wall of the battery cell that is provided with the first pressure relief mechanism, when the battery cell is subjected to thermal runaway, emissions of the battery cell that are discharged through the first pressure relief mechanism will be discharged towards a direction away from the thermal management component, so that the emissions are less likely to break through the thermal management component, and the thermal management component can cool down the battery cell that is suffering from thermal runaway, thus avoiding thermal diffusion and enhancing the safety of the battery.

In addition, the battery further includes a discharge pathway, wherein the discharge pathway can be in communication with the interior of the battery cell through the first pressure relief mechanism when the first pressure relief mechanism is actuated, so that emissions inside the battery cell can be discharged to the discharge pathway through the first pressure relief mechanism, so as to avoid thermal diffusion caused by the accumulation of emissions inside the battery cell, thereby improving the safety of the battery.

The technical solutions described in embodiments of the present application are all applicable to a variety of electrical devices using batteries.

The electrical device may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. Embodiments of the present application do not impose special limitations on the above electrical device.

For the convenience of illustration, the following embodiments are illustrated with the electrical device being a vehicle as an example.

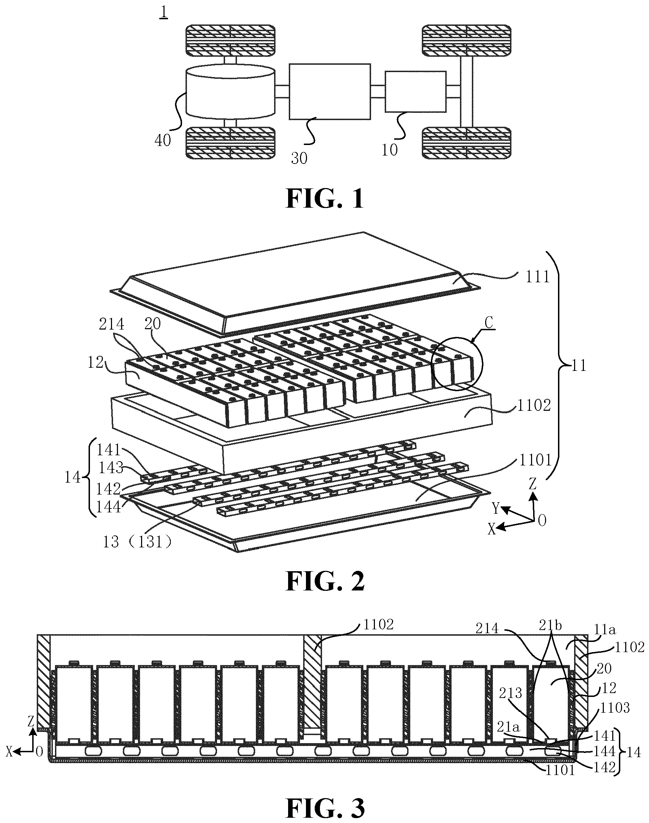

As an example, as shown in Fig.1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. The interior of the vehicle 1 can be provided with a motor 40, a controller 30, and a battery 10, and the controller 30 is used for controlling the battery 10 to power the motor 40. As an example, the battery 10 may be arranged at the bottom or the head or the tail of the vehicle 1. The battery 10 may be configured to supply power to the vehicle 1. As an example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve not only as an operating power supply for the vehicle 1, but also as a driving power source for the vehicle 1, so as to replace or partially replace fuel or natural gas to provide driving power for the vehicle 1.

In order to meet different power requirements for use, the battery may include a plurality of battery cells, wherein the plurality of battery cells may be connected to each other in a series connection or a parallel connection or a parallel-series hybrid connection which is a mixture of series and parallel connections. The battery may also be called a battery pack. As an example, the multiple battery cells may first be connected in a series connection or a parallel connection or a parallel-series hybrid connection to form battery modules, and multiple battery modules may then be connected in a series connection or a parallel connection or a parallel-series hybrid connection to form a battery. In other words, the plurality of battery cells can directly form a battery, or can first form battery modules, and the battery modules then form a battery.

Fig. 2 illustrates an exploded structural schematic diagram of the battery 10 of an embodiment of the present application; and Fig. 3 illustrates a cross-sectional schematic diagram of the battery 10 of an embodiment of the present application. As an example, the battery 10 described in that Fig. 3 may be the battery 10 shown in Fig. 2. As shown in Figs. 2 and 3, the battery 10 of an embodiment of the present application includes: a battery cell 20, a first wall 21a of the battery cell 20 being provided with a first pressure relief mechanism 213; a thermal management component 12 for regulating the temperature of the battery cell 20, wherein the thermal management component 12 is attached to a second wall 21b of the battery cell 20, the second wall 21b being different from the first wall 21a and the area of the second wall 21b being greater than or equal to that of the first wall 21a; and a discharge pathway 13 configured to be capable of getting in communication with the interior of the battery cell 20 via the first pressure relief mechanism 213 when the first pressure relief mechanism 213 is actuated, so that emissions of the battery cell 20 are discharged to the discharge pathway.

It should be understood that the shape of the battery cell 20 of embodiments of the present application can be set according to the actual application. As an example, the battery cell 20 may have a polyhedral structure that is formed through enclosure by multiple walls, so the battery cell 20 may include multiple walls. Among them, the first wall 21a of the battery cell 20 is provided with a first pressure relief mechanism 213, and the second wall 21b of the battery cell 20 faces the thermal management component 12. The first wall 21a and the second wall 21b may be any two different walls of the battery cell 20, for example, the first wall 21a and the second wall 21b may or may not intersect; and the area of the second wall 21b is not smaller than that of the first wall 21a. As an example, the second wall 21b may be the wall of the battery cell 20 that has the largest area while the first wall 21a may be the wall of the battery cell 20 that has the smallest area. Alternatively, the areas of the first wall 21a and the second wall 21b may be equal. As an example, they are both the walls of the battery cell 20 that have the largest area, and embodiments of the present application are not limited thereto.

It should be understood that the thermal management component 12 of embodiments of the present application is used to regulate the temperature of the battery cell 20. As an example, the thermal management component 12 may accommodate a fluid or a solid-liquid phase change material to regulate the temperature of multiple battery cells 20. As a further example, the thermal management component 12 may include a flow channel 121, wherein the flow channel 121 may be used to accommodate a fluid or a solid-liquid phase change material. Specifically, the fluid may be a liquid or a gas; the solid-liquid phase change material is in a solid state in its original state and may become a liquid after absorbing heat; and regulating the temperature means heating or cooling the multiple battery cells 20. In the case of cooling or cooling down the battery cell 20, the thermal management component 12 is used to accommodate a cooling fluid or solid-liquid phase change material to lower the temperature of the multiple battery cells 20. At this point, the thermal management component 12 may also be referred to as a cooling component, a cooling system, or a cooling plate, etc., and the fluid it accommodates may also be referred to as a cooling medium or cooling fluid, and more specifically, as a cooling liquid or cooling gas. In addition, the thermal management component 12 can also be used for heating to raise the temperature of the multiple battery cells 20, which is not limited in embodiments of the present application. Optionally, the fluid may flow in a circulating manner to achieve a better temperature regulation effect. Optionally, the fluid may be water, a mixture of water and ethylene glycol, or air, etc.

It should be understood that embodiments of the present application do not limit the manner in which the thermal management component 12 is connected to the battery cell 20. As an example, the thermal management component 12 may be fixedly connected to the battery cell 20 by means of an adhesive agent; alternatively, the thermal management component 12 may be clamped and fixed between two adjacent battery cells 20.

In embodiments of the present application, the thermal management component 12 is attached to the second wall of the battery cell 20 that is not provided with the first pressure relief mechanism 213, and the contact area between the thermal management component 12 and the battery cell 20 is large, so that the effect of temperature regulation of the battery cell 20 is remarkable under the normal operation of the battery cell 20. In addition, since the second wall 21b to which the thermal management component 12 is attached is not the first wall of the battery cell 20 that is provided with the first pressure relief mechanism 213, when the battery cell 20 is subjected to thermal runaway, emissions of the battery cell 20 that are discharged through the first pressure relief mechanism 213 will be discharged towards a direction away from the thermal management component 12, so that the emissions are less likely to break through the thermal management component 12, and the thermal management component 12 can cool down the battery cell 20 that is suffering from thermal runaway, thus avoiding thermal diffusion and enhancing the safety of the battery 10.

In addition, the battery 10 further includes a discharge pathway 13, wherein the discharge pathway 13 can be in communication with the interior of the battery cell 20 through the first pressure relief mechanism 213 when the first pressure relief mechanism 213 is actuated, so that emissions inside the battery cell 20 can be discharged to the discharge pathway 13 through the first pressure relief mechanism 213, so as to avoid thermal diffusion caused by the accumulation of emissions inside the battery cell 20, thereby improving the safety of the battery 10.

In embodiments of the present application, the battery 10 further includes: a box body 11, wherein the box body 11 includes an electrical cavity 11a, the electrical cavity 11a being used to accommodate the battery cell 20 and the thermal management component 12. The electrical cavity 11a of the box body 11 of embodiments of the present application is used to accommodate at least one battery cell 20 and at least one thermal management component 12, which means that the electrical cavity 11a provides a mounting space for the battery cell 20 and the thermal management component 12. Among them, the electrical cavity 11a may be sealed or unsealed.

Optionally, the shape of the electrical cavity 11a may depend on the accommodated battery cell 20 and/or thermal management component 12. As an example, as shown in Figs. 2 to 3, the electrical cavity 11a may be a hollow cuboid, which is formed through enclosure by at least six walls, so as to facilitate machining. Moreover, the electrical cavity 11a of embodiments of the present application may be formed in various manners. As an example, as shown in Figs. 2 and 3, the box body 11 may include multiple portions of the same or different shapes, and the multiple portions are interconnected and snapped together to form a hollow cuboid, but embodiments of the present application are not limited thereto.

It should be understood that the electrical cavity 11a of embodiments of the present application has no limitations on either the number of battery cells 20 or the number of thermal management components 12 accommodated therein. In addition, other components may be provided in the electrical cavity 11a. As an example, the electrical cavity 11a may also include structures for securing the battery cells 20 and/or the thermal management components 12.

As a further example, the electrical cavity 11a of embodiments of the present application may also be used to accommodate a convergence component, which means that the electrical cavity 11a provides a mounting space for the battery cells 20 and the convergence component. The convergence component is used to realize the electrical connection between the multiple battery cells 20, such as a parallel connection or a series connection or a hybrid connection. The convergence component can realize the electrical connection between the battery cells 20 by connecting the electrode terminals 214 of the battery cells 20. In some embodiments, the convergence component may be fixed to the electrode terminals 214 of the battery cells 20 by means of welding.

In embodiments of the present application, the discharge pathway 13 includes a first pathway 131, the first pathway 131 being used to discharge emissions discharged from the first pressure relief mechanism 213 to the electrical cavity 11a. Since the battery cell 20 is provided in the electrical cavity 11a, the emissions discharged through the first pressure relief mechanism 213 for the battery cell 20 are discharged through the first pathway 131 directly to the electrical cavity 11a where the battery cell 20 is located, then the emissions can be discharged from the electrical cavity 11a without the need to additionally provide other structures, which makes the structure of the box body 11 simpler and easier to realize.

It should be understood that the electrical cavity 11a includes a third wall 1101 opposite to the first wall 21a, and at least part of the first pathway 131 is disposed between the first wall 21a and the third wall 1101. The first wall 21a of the battery cell 20 being provided with the first pressure relief mechanism 213 and the first pathway 131 being provided between the first wall 21a and the third wall 1101 can cause the emissions discharged through the first pressure relief mechanism 213 to directly enter into the first pathway 131, so that the purpose of directional discharging of the emissions can be achieved through the provision of the first pathway 131, which avoids the influence of the emissions on other components in the electrical cavity 11a, thus improving the safety of the battery 10.

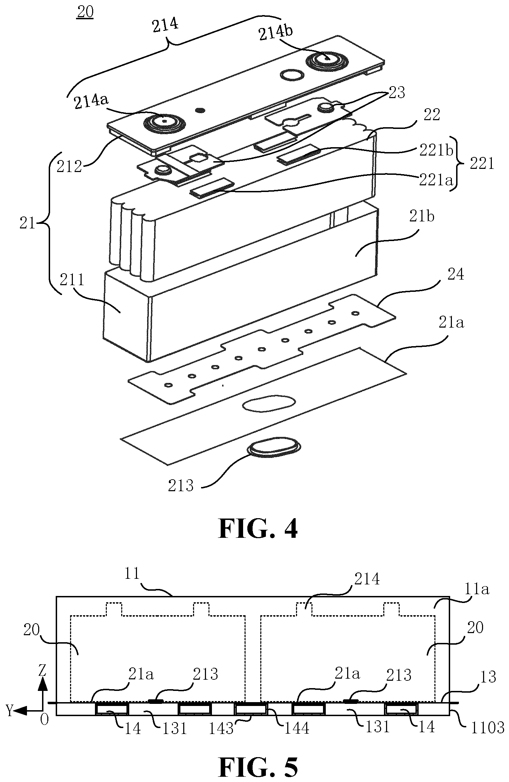

Specifically, the first wall 21a of the battery cell 20 of embodiments of the present application is provided with a first pressure relief mechanism 213. Fig. 4 illustrates an exploded structural schematic diagram of the battery cell 20 in embodiments of the present application. As an example, the battery cell 20 shown in Fig. 4 can be any of the battery cells 20 in the battery 10 shown in Figs. 2 and 3. As shown in Fig. 4, the battery cell 20 includes a shell 21, wherein the shell 21 may include multiple walls, which means that a hollow shell 21 is formed through enclosure by the multiple walls. The shell 21 may include a case 211 and a cover plate 212. The walls of the case 211 as well as the cover plate 212 are all referred to as the walls of the battery cell 20. The shape of the case 211 can depend on the shape of one or more electrode assemblies 22 within it after being combined. As an example, the case 211 can be a hollow cuboid or cube or cylinder, and at least one face of the case 211 has an opening so that the one or more electrode assemblies 22 may be placed within the case 211. As an example, when the case 211 is a hollow cuboid or cube, at least one face of the case 211 is an open face, which means that the open face does not have a wall such that the inside and outside of the case 211 are in communication. When the case 211 may be a hollow cylinder, each of the two end faces of the case 211 may be an open face, which means that the end face does not have a wall such that the inside and outside of the case 211 are in communication. By providing at least one cover plate 212, at least one opening of the case 211 can be covered, respectively, and each cover plate 212 is connected to the case 211 to form a closed cavity in which the electrode assembly 22 is placed. The case 211 is filled with an electrolyte, such as an electrolyte solution.

In embodiments of the present application, a first pressure relief mechanism 213 is provided on the first wall 21a of the battery cell 20, the first pressure relief mechanism 213 being used to be actuated to relieve the internal pressure or temperature of the battery cell 20 when the internal pressure or temperature reaches a threshold value. Optionally, the first wall 21a may be any one of the walls of the battery cell 20. As an example, this first wall 21a may be the wall of the battery cell 20 that has the largest area, so that, since the area of the second wall 21b is not smaller than that of the first wall 21a, the first wall 21a and the second wall 21b may be equal in area and both be the walls of the battery cell 20 that have the largest area. As a further example, as shown in Fig. 4, the first wall 21a may be the wall of the battery cell 20 that has the smallest area. As an example, the first wall 21a may be a bottom wall of the case 211 for ease of mounting. For ease of illustration, embodiments of the present application are mainly illustrated with the first wall 21a being the bottom wall of the case 211 of the battery cell 20 as an example; and for ease of demonstration, in Fig. 4, the first wall 21a is separated from the case 211, which, however, does not define whether the bottom side of the case 211 has or does not have an opening, meaning that the bottom wall and the side wall of the case 211 may be of an integral structure or may be two parts that are independent of each other and are connected together.

Specifically, as shown in Fig. 4, the first pressure relief mechanism 213 may be part of the first wall 21a, or may be of a split structure from the first wall 21a so as to be secured to the first wall 21a by means of, for example, welding. When the first pressure relief mechanism 213 is a part of the first wall 21a, which means that the first pressure relief mechanism 213 may be integrally molded with the first wall 21a, the first pressure relief mechanism 213 may be formed by providing a score or a groove on the first wall 21a, which score causes the thickness of the region of the first wall 21a where the first pressure relief mechanism 213 is located to be smaller than the thickness of the other region of the first wall 21a other than the first pressure relief mechanism 213. When too much gas is generated by the battery cell 20 so that the internal pressure of the case 211 rises and reaches a threshold, or when the heat generated by the internal reaction of the battery cell 20 causes the internal temperature of the battery cell 20 to rise and reach a threshold, the battery cell 20 can be broken at the score and thus lead to communication between the inside and the outside of the shell 21, so that the gas pressure and temperature are released outwardly through the cracking of the first pressure relief mechanism 213, thereby avoiding an explosion of the battery cell 20.

Optionally, the first pressure relief mechanism 213 of embodiments of the present application may be of a variety of possible pressure relief structures, which is not limited in embodiments of the present application. As an example, the first pressure relief mechanism 213 may be a temperature-sensitive pressure relief mechanism, which is configured to be able to melt when the internal temperature of the battery cell 20 provided with the first pressure relief mechanism 213 reaches a threshold; and/or the first pressure relief mechanism 213 may be a pressure-sensitive pressure relief mechanism, which is configured to be able to be broken when the internal air pressure of the battery cell 20 provided with the first pressure relief mechanism 213 reaches a threshold.

Optionally, in an embodiment of the present application, in the case where the first pressure relief mechanism 213 is provided in the first wall 21a of the battery cell 20, the shell 21 of the battery cell 20 may also be provided with electrode terminals 214, wherein the electrode terminals 214 are located in a wall that may be the same or different from the first wall 21a. As an example, as shown in Fig. 4, embodiments of the present application are illustrated with the wall where the electrode terminals 214 are located being different from the first wall 21a as an example. As an example, the wall where the electrode terminals 214 are located is provided opposite to the first wall 21a, and if the first wall 21a may be the bottom wall of the battery cell 20, the wall where the electrode terminals 214 are located may be the cover plate 212 of the battery cell 20, so that the emissions of the battery cell 20 that are discharged through the first pressure relief mechanism 213 will not affect the electrode terminals 214, thus avoiding a short-circuit and improving the safety of the battery cell 20.

Specifically, as shown in Fig. 4, the battery cell 20 may include at least two electrode terminals 214, where the at least two electrode terminals 214 may be provided on the same wall or may also be provided on different walls. Fig. 4 takes an example in which the battery cell 20 includes two electrode terminals 214 and the two electrode terminals 214 are provided on a cover plate 212 of a flat-plate shape. The at least two electrode terminals 214 may include at least one positive electrode terminal 214a and at least one negative electrode terminal 214b.

The electrode terminals 214 of embodiments of the present application are used for electrical connection to the electrode assembly 22 to output electrical energy. As an example, each of the electrode terminals 214 may be correspondingly provided with one connection member 23, which may also be referred to as a current collecting member 23 and which is disposed between the cover plate 212 and the electrode assembly 22 for realizing an electrical connection between the electrode assembly 22 and the electrode terminals 214.

As shown in Fig. 4, each electrode assembly 22 has a first tab 221a and a second tab 222a. The first tab 221a and the second tab 222a are of opposite polarities. As an example, when the first tab 221a is a positive tab, the second tab 222a is a negative tab. The first tab 221a of the one or more electrode assemblies 22 is connected to one electrode terminal via one connection member 23, and the second tab 222a of the one or more electrode assemblies 22 is connected to the other electrode terminal via another connection member 23. As an example, the positive electrode terminal 214a is connected to the positive tab via one connection member 23, and the negative electrode terminal 214b is connected to the negative tab via another connection member 23.

In this battery cell 20, the number of electrode assemblies 22 may be set as a single one or a plurality according to the actual use requirements. As shown in Fig. 4, there are 4 independent electrode assemblies 22 provided in the battery cell 20, but embodiments of the present application are not limited thereto.

Optionally, as shown in Fig. 4, the battery cell 20 may also include a backing plate 24, wherein the backing plate 24 is disposed between the electrode assembly 22 and the bottom wall of the case 211, and can play a supporting role for the electrode assembly 22, and can also effectively prevent the electrode assembly 22 from interfering with the rounded corners around the bottom wall of the case 211. In addition, the backing plate 24 may be provided with one or more through holes. As an example, multiple uniformly arranged through holes may be provided, or, alternatively, a through-hole may be provided at a position corresponding to the first pressure relief mechanism 213 when the first pressure relief mechanism 213 is provided in the bottom wall of the case 211, so as to facilitate liquid and gas guidance. Specifically, this allows the spaces on the upper and lower surfaces of the backing plate 24 to be in communication, so that the gas generated inside the battery cell 20 as well as the electrolyte solution can freely pass through the backing plate 24.

It should be understood that for ease of illustration, embodiments of the present application are mainly illustrated with the first wall 21a being the bottom wall of the case 211 of the battery cell 20 as an example, then, as shown in Figs. 2 to 4, the wall of the electrical cavity 11a that is opposite to the first wall 21a is the third wall 1101, and the first pathway 131 may be disposed between the first wall 21a and the third wall 1101. Specifically, this first pathway 131 may be formed in a variety of ways.

Optionally, as an embodiment, the battery 10 further includes: a first support member 14, the first support member 14 being provided between the first wall 21a and the third wall 1101, and the first support member 14 being used to form at least part of the first pathway 131. On the one hand, this first support member 14 is between the first wall 21a and the third wall 1101, which can function to provide support, so as to enable the third wall 1101 to have a better anti-pressure strength. When an external pressure acts on the battery 10, this first support member 14 provided can resist most or even all of the external pressure, thereby reducing or eliminating the influence of the external pressure on components such as the battery cells 20 and the thermal management components 12 in the electrical cavity 11a, thus enhancing the anti-pressure performance and safety performance of the battery 10. On the other hand, the first support member 14 can also be used to form at least part of the first pathway 131 for emissions of the battery cell 20 to pass through, so that the emissions pass through the first pathway 131, thus realizing directional discharging.

Optionally, the shape and the number of the first support member 14 of embodiments of the present application may be flexibly set according to the actual application. As an example, as shown in Figs. 2 to 3, the first support member 14 may be a strip-shaped structure. As an example, it may be a rectangular strip or a diamond-shaped strip. The strip-shaped structure is easier to machine and can be flexibly mounted in a regularly or irregularly shaped cavity. As an example, if there is a cuboid space between the first wall 21a and the third wall 1101, the one or more first support members 14 of the strip-shaped structure may be mounted parallel to the long sides or short sides of the cuboid.

As a further example, the first support member 14 of embodiments of the present application may also be of a ring-shaped structure. As an example, it may be of a circular ring structure or a square ring structure. This ring-shaped first support member 14 is applicable to a regularly shaped cavity, and provide a more comprehensive support for the cavity. As an example, if there is a cuboid space between the first wall 21a and the third wall 1101, the center of the ring-shaped first support member 14 may be correspondingly provided at the center of the cuboid.

Optionally, the first support member 14 of embodiments of the present application may be of a hollow structure or a solid structure. As an example, as shown in Figs. 2 to 3, the first support member 14 may be of a hollow structure, and compared to the first support member 14 of the solid structure, the first support member 14 of the hollow structure itself has a smaller weight, and does not additionally add a great weight to the battery 10, thereby increasing the energy density of the battery 10. Embodiments of the present application are illustrated with the first support member 14 being of a hollow structure as an example.

Optionally, the first support member 14 may be of a tubular structure. Specifically, as shown in Figs. 2 to 3, the first support member 14 of embodiments of the present application may be of an internally hollow tubular structure, which has a high axial stiffness as well as a radial dimension adaptable to the distance between the first wall 21a and the third wall 1101, thereby functioning to provide good support.

In some implementations, the cross section of the tubular structure can be any polygon. As an example, the number of sides of the polygon is usually greater than or equal to 4, so as to improve the stability of the tubular structure. In some other implementations, the cross section of the tubular structure may also be of a circular ring shape, a racetrack shape or other shapes, which is not specifically limited in embodiments of the present application.

Optionally, the thickness of the tubular wall of the first support member 14 of the tubular structure provided by embodiments of the present application may be between 0.5 mm and 3 mm, which can ensure the stiffness and anti-pressure strength of the first support member 14 of the tubular structure.

In addition, the material of the first support member 14 provided by embodiments of the present application may be a material with good ductility and high strength, which can buffer and resist external pressures and has a high anti-pressure strength. As an example, the material of the first support member 14 may be a metallic material, for example: copper, aluminum and the like. Alternatively, the material of the first support member 14 may also be a nonmetallic material with a certain strength, for example: mica, ceramics and the like.

In embodiments of the present application, this first support member 14 may form at least part of the first pathway 131 in a variety of ways. As an example, the first support member 14 may be structured such that the first support member 14 itself forms at least part of the first pathway 131; or the first pathway 131 for passage of emissions may be formed between the first support member 14 and the cavity wall of the electrical cavity 1 1a; or if the number of first support members 14 is multiple, the first pathway 131 for passage of emissions may also be formed between the multiple first support members 14.

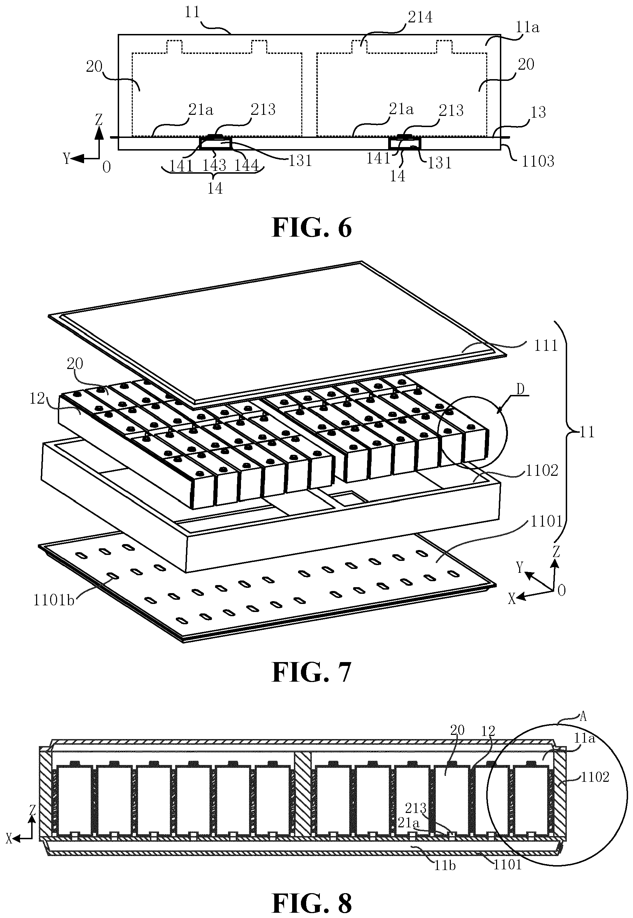

Figs. 5 and 6 respectively illustrate several possible cross-sectional schematic diagrams of the battery 10 of embodiments of the present application. As an example, the Figs. 5 and 6 may be several possible partial cross-sectional schematic diagrams of the battery 10 shown in Fig. 2. Specifically, in Fig. 2, the battery 10 includes multiple battery cells 20 arranged along the second direction Y As an example, Fig. 2 is illustrated with 4 battery cells 20 being included as an example, while Figs. 5 and 6 are illustrated with only two battery cells 20 arranged along the second direction Y as an example. Additionally, the cross-section shown in Fig. 3 is perpendicular to the second direction Y, while the cross-sections shown in Figs. 5 and 6 are perpendicular to the first direction X, wherein the first direction X is perpendicular to the second direction Y. As an example, this first direction X may be the direction in which each first support member 14 extends, or the axial direction of each first support member 14, but embodiments of the present application are not limited thereto.

As shown in Fig. 5, the first support member 14 is provided in correspondence with the region of the first wall 21a other than the first pressure relief mechanism 213, so as to form at least part of the first pathway 131 outside the first support member 14. The first support member 14 is provided in correspondence with the region of the first wall 21a other than the first pressure relief mechanism 213, then emissions discharged through the first pressure relief mechanism 213 is outside of the first support member 14, thereby forming at least part of the first pathway 131 outside of the first support member 14. As an example, at least part of the first pathway 131 may be formed between multiple first support members 14 or between the first support member 14 and the wall of the electrical cavity 11a, so that the emissions are directionally discharged.

With the technical solutions of embodiments of the present application, the first support member 14 being provided in correspondence with the region of the first wall 21a other than the first pressure relief mechanism 213 avoids the influence of the first support member 14 on the first pressure relief mechanism 213, for example, to avoid blockage by the first support member 14 of emissions from the inside of the battery cell 20 that are discharged via the first pressure relief mechanism 213, allowing them to be discharged in a timely manner. Therefore, the first support member 14 provided based on embodiments of the present application will not affect the safety performance of the battery cell 20 while improving the anti-pressure strength of the first wall 21a and the third wall 1101.

Optionally, as shown in Fig. 5, the first support member 14 abuts against the region of the first wall 21a other than the first pressure relief mechanism 213. Specifically, the first support member 14 can directly or indirectly contact the region of the first wall 21a other than the first pressure relief mechanism 213, so as to ensure that the first support member 14 functions to provide good support to the first wall 21a. As an example, in the height direction z of the box body 11, the first support member 14 may be provided below the first wall 21a to support the first wall 21a and the battery cells 20.

Optionally, the battery 10 includes multiple first support members 14 provided at intervals, at least part of the first pathway 131 being formed between the multiple first support members 14. Since the battery 10 usually includes multiple battery cells 20, multiple first support members 14 can be correspondingly provided at intervals between the first wall 21a and the third wall 1101 of the multiple battery cells 20, so that at least part of the first pathway 131 can be formed between the multiple first support members 14, and the emissions can be discharged to between the multiple first support members 14 after being discharged through the first pressure relief mechanism 213, so as to realize directional discharging.

Optionally, as an example, as shown in Fig. 5, for each battery cell 20, one or the first support member 14 may be provided correspondingly according to the size and position of that battery cell 20; and for the multiple battery cells 20 arranged along the second direction Y, one and the same first support member 14 may be provided correspondingly between two adjacent battery cells 20, wherein the direction of extension of that first support member 14 is the first direction X, which means that two rows of battery cells 20 extending along the first direction X can share one and the same first support member 14. In this way, by setting the first support member 14 correspondingly between two adjacent rows of battery cells 20, it is possible to use a lower number of first support members 14, which can both facilitate the mounting and reduce the weight of the battery 10 while providing a good support effect.

Optionally, as another embodiment, as shown in Fig. 6, the first support member 14 is provided with a first open hole 141, the first open hole 141 being provided in correspondence with the first pressure relief mechanism 213 so that emissions passing through the first pressure relief mechanism 213 are discharged through the first open hole 141. In this way, the emissions of the battery cell 20 are discharged through the first pressure relief mechanism 213 and enter the first open hole 141, and the directional discharging of the emissions can be realized by reasonably arranging the position of the first open hole 141.

As an example, if the first support member 14 is of a solid structure, the first open hole 141 may be a through hole penetrating through the first support member 14, so that the first support member 14 itself forms at least part of the first pathway 131.

Alternatively, the first support member 14 is of a hollow structure, and the first pressure relief mechanism 213 is in communication with the interior of the first support member 14 through the first open hole 141, so as to form at least part of the first pathway 131 inside the first support member 14. Specifically, the first support member 14 is of a hollow structure. As an example, the first support member 14 may be of a tubular structure, and the first open hole 141 may be a through hole penetrating through the tubular wall of the first support member 14. The first open hole 141 is provided opposite to the first pressure relief mechanism 213 and does not hinder the actuation of the first pressure relief mechanism 213. In this way, while the first support member 14 fulfills the support function, the first open hole 141 of the first support member 14 also facilitates the reception of emissions of the battery cell 20 that are discharged via the first pressure relief mechanism 213, and the emissions can be collected to the interior of the first support member 14 after passing through the first open hole 141, so that the emissions can be directionally discharged, thereby preventing emissions from affecting the components in the electrical cavity 11a.

It should be understood that the cross-sectional area of the first open hole 141 is not smaller than the area of the first pressure relief mechanism 213, so as to further enhance the good passage effect of the first open hole 141 on emissions and avoid blockage by the first open hole 141 of the emissions discharged from the first pressure relief mechanism 213 from entering the first pathway 131.

Optionally, as shown in Fig. 6, the multiple battery cells 20 arranged along the first direction X may be correspondingly provided with one and the same strip-shaped first support member 14, and each first support member 14 of the strip-shaped structure is correspondingly provided below the first pressure relief mechanisms 213 of each row of battery cells 20, then it is possible to use a lower number of first support members 14 that are easy to mount to achieve a good support effect.

In the above embodiments of the present application, as shown in Figs. 2 to 6, the first support member 14 abuts against the first wall 21a and/or the third wall 1101. In this way, the first support member 14 can function to provide support for the first wall 21a and/or the third wall 1101 to improve the overall anti-pressure strength of the first wall 21a and/or the third wall 1101, and in particular when the first support member 14 abuts against the first wall 21a and the third wall 1101 at the same time, it can increase the overall anti-pressure strength of the first wall 21a and the third wall 1101 at the same time, thereby preventing the external pressure from affecting components such as battery cells 20 in the electrical cavity 11a.

Optionally, a connecting face 143 of the first support member 14 abuts against the first wall 21a and/or the third wall 1101, and a non-connecting face 144 of the first support member 14 is provided with a second open hole 142, so as to form at least part of the first pathway 131 outside the first support member 14. Specifically, the connecting face 143 of the first support member 14 is a face that contacts the first wall 21a and/or the third wall 1101, and on the contrary, the non-connecting face 144 of the first support member 14 is a face of the first support member 14 that does not contact the first wall 21a and does not contact the third wall 1101, and the non-connecting face 144 of the first support member 14 may be provided with the second open hole 142 to form at least part of the first channel 131 in the first support member 14, so as to increase the discharge path for the passage of emissions of the battery cell 20.

Specifically, whether at least part of the first pathway 131 is formed outside the first support member 14 or at least part of the first pathway 131 is formed inside the first support member 14, the non-connecting face 144 of the first support member 14 may be used to form the wall of the at least part of the first pathway 131, then the provision of the second open hole 142 on this non-connecting face 144 can allow gases in the emissions in the first pathway 131 to be discharged, while the region of the non-connecting face 144 that is not provided with the second open hole 142 can be used to block solids in the emissions.

As an example, the second open hole 142 of the first support member 14 may be used for passage of gases and/or liquids in the emissions, while other regions of the first support member 14 may be used for blockage of solids in the emissions. As mentioned above, the emissions from the battery cell 20 include, but are not limited to: electrolyte solution, dissolved or split positive and negative electrode plates, separator fragments, high-temperature and high-pressure gases produced from reactions, sparks, and the like, all of which are high-temperature substances. Among other things, if high-temperature positive and negative electrode plates, high-temperature separator fragments, sparks, and other solid substances are discharged directly through the discharge valve to the outside of the box body 11, this will pose a great safety hazard. With the technical solutions of embodiments of the present application, the second open hole 142 can allow the passage of high-temperature gases and/or high-temperature liquids in the emissions, while other regions of the first support member 14 block high-temperature solids in the emissions. Then, the second open hole 142 of the first support member 14 filters the high-temperature solids in the emissions and blocks the high-temperature solids in the interior of the first channel 131, so as to prevent the high-temperature solids in the emissions from being discharged and thus causing safety hazards, thereby enhancing the safety of the battery 10 and the electrical device in which it is located.

Optionally, in embodiments of the present application, the size of the first open hole 141 and/or the size of the second open hole 142 can be flexibly set according to the actual application. As an example, the sizes of the first open hole 141 and the second open hole 142 may be different or the same. As an example, the size of the first open hole 141 is larger than that of the second open hole 142, so that the first open hole 141 with a larger size can allow the smooth passage of the emissions discharged via the first pressure relief mechanism 213 without blocking the discharge of the emissions, while the second open hole 142 with a smaller size can play a filtering role, which means that the second open hole 142 allows the passage of the high-temperature gases and/or high-temperature liquids in the emissions, and the first support member 14 blocks the high-temperature solids in the emissions, so as to prevent the high-temperature solids in the emissions from being discharged out of the box body 11 and thus causing safety hazards, thereby enhancing the safety of the battery and the electrical device in which it is located.

Optionally, in embodiments of the present application, the shape of the first open hole 141 and/or the shape of the second open hole 142 can be flexibly set according to the actual application. As an example, the shapes of the first open hole 141 and the second open hole 142 may be the same or different. As an example, the shape of the first open hole 141 can be consistent with that of the first pressure relief mechanism 213, so as to facilitate the smooth and timely passage of the emissions; while the shape of the second open hole 142 is generally set to be rectangular or circular to facilitate machining.

Optionally, in embodiments of the present application, the number of the first open holes 141 and/or the number of the second open holes 142 can be flexibly set according to the actual application. As an example, the numbers of the first open holes 141 and the second open holes 142 may be the same or different. As an example, the number of the first open holes 141 may be consistent with that of the corresponding first pressure relief mechanisms 213, so that the first open holes 141 are in one-to-one correspondence with the first pressure relief mechanisms 213; and the number of the second open holes 141 may be flexibly set according to the actual application.

It should be understood that at least part of the first pathway 131 is formed by the first support member 14 as described above, or, alternatively, at least part of the first pathway 131 may be formed in other ways, and that the different ways may be applied independently of each other or in combination with each other, and embodiments of the present application are not limited thereto.

As an example, there is a gap between the first wall 21a and the third wall 1101, the gap being used to form at least part of the first pathway 131, which can reduce the requirement for sealing of the electrical cavity 11a and, in particular, can reduce the requirement for sealing between the first wall 21a and the third wall 1101, thereby reducing the machining difficulty of the battery 10 and improving the efficiency of machining the battery 10.

It should be understood that, as shown in Figs. 2 to 6, the first pathway 131 of embodiments of the present application can discharge the emissions discharged through the first pressure relief mechanism 213 to the electrical cavity 11a, and further, a second pressure relief mechanism 1103 may be provided on the wall of the electrical cavity 11a of the battery 10, the second pressure relief mechanism 1103 being used to discharge the emissions passing through the first pathway 131 out of the electrical cavity 11a, which, for example, may be discharged out of the box body 11 to avoid thermal diffusion triggered by the accumulation of emissions in the electrical cavity 11a, thus improving the safety of the battery 10.

As an example, as shown in Figs. 2 to 6, the third wall 1101 and/or the fourth wall 1102 are/is provided with the second pressure relief mechanism 1103, the second pressure relief mechanism 1103 being used to discharge emissions passing through the first pathway 131 out of the electrical cavity 11a, and the fourth wall 1102 being a wall of the electrical cavity 11a that intersects with the third wall 1101. The first pathway 131 is disposed between the first wall 21a and the third wall 1101. If the second pressure relief mechanism 1103 is provided on the third wall 1101, the emissions in the first pathway 131 can be discharged from the electrical cavity 11a in a timely manner, so as to avoid thermal diffusion caused by the accumulation of the emissions in the electrical cavity 11a, thereby improving the safety of the battery 10.

Optionally, as shown in Fig. 5, for the first support members 14 provided between the first wall 21a and the third wall 1101, the central axis of each of the first support members 14 may extend in any direction, for example, in the first direction X, to form at least part of the first channel 131 between the multiple first support members 14 or inside the first support members 14. Then, the first channel 131 corresponding to the first pressure relief mechanism 213, similarly to the first support member 14, may likewise extend in a certain direction, for example, in the first direction X, then the end portion of the first channel 131 is oriented towards the fourth wall 1102 of the electrical cavity 11a, the fourth wall 1102 intersecting with the third wall. Therefore, the second pressure relief mechanism 1103 is provided on the fourth wall 1102, then this second pressure relief mechanism 1103 is close to the end portion of the first pathway 131, which can likewise achieve the purpose of quickly discharging the emissions, so as to avoid thermal diffusion caused by the accumulation of the emissions in the electrical cavity 11a, thereby improving the safety of the battery 10.

Optionally, the second pressure relief mechanism 1103 of embodiments of the present application may be implemented in a variety of ways. As an example, taking the second pressure relief mechanism 1103 being provided on the fourth wall 1102 as an example, the second pressure relief mechanism 1103 may be a part of the fourth wall 1102, or it may be of a split structure from the fourth wall 1102, so as to be secured to the fourth wall 1102 by means of, for example, welding. When the second pressure relief mechanism 1103 is a part of the fourth wall 1102, which means that the second pressure relief mechanism 1103 may be integrally molded with the fourth wall 1102, the second pressure relief mechanism 1103 may be formed by providing a score or a groove on the fourth wall 1102, which score causes the thickness of the region of the fourth wall 1102 where the second pressure relief mechanism 1103 is located to be smaller than the thickness of the other region of the fourth wall 1102 other than the second pressure relief mechanism 1103. When there are too many emissions collected in the first pathway 131 so that the internal pressure of the electrical cavity 11a rises and reaches a threshold, or when the temperature of the emissions inside the first pathway 131 rises and reaches a threshold, the fourth wall 1102 may be broken at the score to cause the electrical cavity 11a to be in communication with the outside, so that the gas pressure and the temperature are released outwardly through the cracking of the second pressure relief mechanism 1103, thus avoiding an explosion of the battery 10.

Optionally, the second pressure relief mechanism 1103 of embodiments of the present application may be of a variety of possible pressure relief structures, which is not limited in embodiments of the present application. As an example, the second pressure relief mechanism 1103 may be a temperature-sensitive pressure relief mechanism, which is configured to be able to melt when the internal temperature of the electrical cavity 11a provided with the second pressure relief mechanism 1103 reaches a threshold; and/or the second pressure relief mechanism 1103 may be a pressure-sensitive pressure relief mechanism, which is configured to be able to be broken when the internal air pressure of the electrical cavity 11a provided with the second pressure relief mechanism 1103 reaches a threshold.

In some embodiments, the battery 10 may also be provided with a second pathway 132. Specifically, the discharge pathway 13 includes a second pathway 132, the second pathway 132 being used to discharge emissions discharged from the first pressure relief mechanism 213 out of the electrical cavity 11a. The emissions discharged through the first pressure relief mechanism 213 of the battery cell 20 are discharged out of the electrical cavity 11b through the second pathway 132, and the emissions do not affect the battery cell 20 in the electrical cavity 11b, which can effectively avoid thermal diffusion as well as short-circuiting of the battery cell 20 caused by the emissions, thus improving the safety of the battery 10. Moreover, through the second pathway 132, the emissions of the battery cell 20 can be collected centrally to avoid the influence of emissions on other components.

In some embodiments, the battery 10 may include both the first pathway 131 and the second pathway 132. In the event of thermal runaway or other abnormal conditions of the battery cell 20, the high-temperature and high-pressure emissions produced inside the battery cell 20 are discharged towards the direction of the battery cell 20 that is provided with the first pressure relief mechanism 213, and the power and destructive force of such emissions are usually large; therefore, the emissions discharged through the first pressure relief mechanism 213 can be divided into two pathways for joint discharging, which can not only increase the discharging speed and reduce the risk of the explosion of the battery 10, but also realize the directional and decentralized discharging, thereby avoiding the influence of the emissions on the other components, so as to improve the safety and stability of the battery 10.

The manner in which the second pathway 132 of embodiments of the present application is provided will be described below.

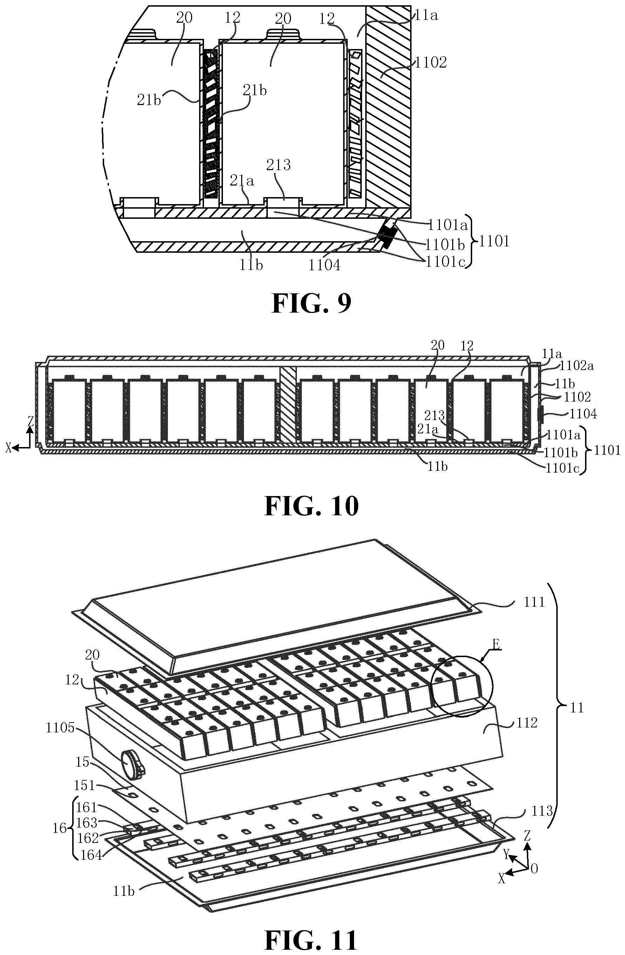

Fig. 7 illustrates an exploded structural schematic diagram of the battery 10 of another embodiment of the present application; Fig. 8 illustrates a cross-sectional schematic diagram of the battery 10 of another embodiment of the present application, and, for example, the battery 10 shown in this Fig. 8 may be the battery 10 shown in Fig. 7, and the cross-section shown in Fig. 8 may be the section of the battery 10 that is perpendicular to the second aspect Y shown in Fig. 7; and Fig. 9 illustrates a partial cross-sectional schematic diagram of the battery 10 of another embodiment of the present application, and this Fig. 9 may, for example, be an enlarged diagram of the region A shown in Fig. 8.

Optionally, as shown in Figs. 7 to 9, the box body 11 further includes: a collection cavity 11b, the collection cavity 11b being used to collect emissions from the battery cell 20 through the second pathway 132 when the first pressure relief mechanism 213 is actuated. This collection cavity 11b collects and/or processes emissions discharged through the first pressure relief mechanism 213 when the pressure relief mechanism 211 is actuated. As an example, it can be used to collect emissions discharged through the second pathway 132 when the first pressure relief mechanism 213 is actuated, and the collection cavity 11b can cool down the emissions and can also discharge the emissions to the outside of the battery 10.

The collection cavity 11b of embodiments of the present application is used to collect emissions of the battery cell 20 and may be sealed or unsealed. Specifically, the collection cavity 11b may contain air, or other gases. Alternatively, in the collection cavity 11b, a liquid, such as a cooling medium, may be contained or, a component that accommodates the liquid may be provided to further cool down the emissions entering the collection cavity 11b. Further optionally, the gas or liquid within the collection cavity 11b may be flowing in a circular manner.

It should be understood that this electrical cavity 11a of embodiments of the present application may be sealed or unsealed; similarly, the collection cavity 11b of embodiments of the present application may also be sealed or unsealed, which is not limited in embodiments of the present application.

It should be understood that the box body 11 of embodiments of the present application may be implemented in a variety of ways, which is not limited in embodiments of the present application. Optionally, using Figs. 7 to 9 as an example, for the electrical cavity 11a, the box body 11 may include a first hood body having an opening, wherein this first hood body is capped by the third wall 1101 to form the electrical cavity 11a. In this way, the walls for forming the electrical cavity 11a include the first hood body and the third wall 1101, and specifically, the walls for forming the electrical cavity 11a includes the first hood body as well as a first sub-wall 1101a of the third wall 1101 that faces the battery cell 20. Among other things, the first hood body may also be implemented in a variety of ways. As an example, the first hood body may be of a hollow integral structure with one end open. Alternatively, the first hood body may include a first portion 111 as well as a second portion of which two opposite sides each has an opening, wherein the second portion includes multiple fourth walls 1102, which means that the second portion may be formed through enclosure by the multiple fourth walls 1102. The first portion 111 caps the opening on one side of the second portion 112 to form the first hood body with one end open.

The corresponding collection cavity 11b, on the other hand, may be implemented by the third wall 1101. Specifically, as shown in Figs. 7 to 9, the electrical cavity 11a includes a third wall 1101 opposite to the first wall 21a, the third wall 1101 being of a hollow structure so that the interior of the third wall 1101 forms at least part of the collection cavity 11b. By forming at least part of the collection cavity 11b in the interior of the third wall 1101, since the third wall 1101 is of an integral structure, the structure of the box body 11 can be simplified, thus facilitating mounting and improving the efficiency of machining the battery 10.

In embodiments of the present application, the first sub-wall 1101a of the third wall 1101 that faces the first wall 21a is provided with a first pressure relief region 1101b, the first pressure relief region 1101b being provided opposite to the first pressure relief mechanism 213, and the first pressure relief region 1101b being used to form at least part of the second pathway 132. The third wall 1101 is of a hollow structure, and, for example, the hollow third wall 1101 may be formed through enclosure by multiple sub-walls. Here, the wall of the third wall 1101 that faces the first wall 21a is the first sub-wall 1101a, wherein this first wall 21a is provided with the first pressure relief mechanism 213, and in order to avoid hindering the actuation of the first pressure relief mechanism 213, the first sub-wall 1101a is provided with a first pressure relief region 1101b. The first pressure relief region 1 101b is used to cause emissions passing through the first pressure relief mechanism 213 to be discharged to the interior of the third wall 1101, i.e., into the collection cavity 11b, via the first pressure relief region 1101b when the first pressure relief mechanism 213 is actuated, thereby avoiding damage of the emissions to other battery cells 20 in the electrical cavity 11a, avoiding thermal diffusion, and improving the safety of the battery 10.

In embodiments of the present application, the first pressure relief region 1101b may be implemented in a variety of ways. As an example, as shown in Figs. 7 to 9, the first pressure relief region 1101b is a first through hole penetrating through the thickness direction of the first sub-wall 1101a, and the second pathway 132 includes the first through hole. The first pressure relief region 1101b being provided as a first through hole, on the one hand, facilitates machining, and on the other hand, the first through hole can provide a deformation space for actuation of the first pressure relief mechanism 213, and when the first pressure relief mechanism 213 is actuated, the emissions are rapidly discharged to the collection cavity 11b inside the third wall 1101, so as to improve the efficiency of discharging the emissions, thereby improving the safety of the battery 10.

As a further example, the first pressure relief region 1101b is a first weak region on the first sub-wall 1101a, the first weak region being used to be broken when the first pressure relief mechanism 213 is actuated, so as to form at least part of the second pathway 132. If this first pressure relief region 1101b is provided as the first weak region, the first weak region can be broken when the first pressure relief mechanism 213 is actuated, so as to allow emissions to pass through the first weak region into the collection cavity 11b inside the third wall 1101. In this way, when the first pressure relief mechanism 213 is not actuated, for example, during normal use of the battery 10, the first weak region can cause the third wall 1101 to be in a relatively sealed state, which can effectively protect the first pressure relief mechanism 213 from failure due to damage by external forces. Moreover, when the first pressure relief mechanism 213 is actuated, the strength of the first weak region is smaller than the strength at other regions of the first sub-wall 1101a other than the first pressure relief region 1 101b, so it is easy for the first weak region to be broken so that emissions from the battery cell 20 provided with the first pressure relief mechanism 213 pass through the first weak region and are discharged out of the electrical cavity 11a, e.g., pass through the first weak region into the collection cavity 11b inside the third wall 1101.

Optionally, the first weak region of the first sub-wall 1101a may be implemented in a variety of ways. As an example, the first sub-wall 1101a is provided with a groove provided opposite to the first pressure relief mechanism 213, wherein this groove is recessed in a direction away from the first pressure relief mechanism 213, so as to provide a deformation space for the first pressure relief mechanism 213, and the bottom wall of the groove may form this first weak region.

Optionally, the first weak region may also be formed in the first sub-wall 1101a as the first pressure relief region 1101b in other ways, for example, by providing a score on the first sub-wall 1101a to form this first weak region, and so on, which is not specifically limited in the present application.

In embodiments of the present application, a second sub-wall 1101c of the third wall 1101 is provided with a third pressure relief mechanism 1104, the third pressure relief mechanism 1104 being used to discharge emissions passing through the second pathway 132 out of the collection cavity 11b, and the second sub-wall 1101c being different from the first sub-wall 1101a. As described in Figs. 7 to 9, the third wall 1101 may include the second sub-wall 1101c that is different from the first sub-wall 1101a. As an example, this second sub-wall 1101c may be a wall that is intersected with or provided opposite to the first sub-wall 1101a. The third pressure relief mechanism 1104 is provided on the second sub-wall 1 101c, so that when the internal pressure or temperature of the collection cavity 11b inside the third wall 1101 reaches a threshold, the third pressure relief mechanism 1104 is actuated to relieve the internal pressure or temperature of the collection cavity 11b, and then discharge the emissions in the collection cavity 11b out of the box body 11 in a timely manner; and the second sub-wall 1101c is different from the first sub-wall 1101a, so that the emissions will not enter the electrical cavity 11a through the third pressure relief mechanism 1104 again, which avoids the influence on components inside the electrical cavity 11a, thus improving the safety of the battery 10.

Optionally, the third pressure relief mechanism 1104 of embodiments of the present application may be implemented in a variety of ways. As an example, the third pressure relief mechanism 1104 may be part of the second sub-wall 1101c, or it may be of a split structure from the second sub-wall 1101c, so as to be fixed to the second sub-wall 1101c by means of, for example, welding. When the third pressure relief mechanism 1104 is a part of the second sub-wall 1101c, which means that the third pressure relief mechanism 1104 may be integrally molded with the second sub-wall 1101c, the third pressure relief mechanism 1104 may be formed by providing a score or a groove on the second sub-wall 1101c, which score causes the thickness of the region of the second sub-wall 1 101c where the third pressure relief mechanism 1104 is located to be smaller than the thickness of the other region of the second sub-wall 1101c other than the third pressure relief mechanism 1104. When there are too many emissions collected in the collection cavity 11b so that the internal pressure thereof rises and reaches a threshold, or when the temperature of the emissions inside the collection cavity 11b rises and reaches a threshold, the second sub-wall 1101c may be broken at the score to cause the collection cavity 11b to be in communication with the outside, so that the gas pressure and the temperature are released outwardly through the cracking of the third pressure relief mechanism 1104, thus avoiding an explosion of the battery 10.

Optionally, the third pressure relief mechanism 1104 of embodiments of the present application may be of a variety of possible pressure relief structures, which is not limited in embodiments of the present application. As an example, the third pressure relief mechanism 1104 may be a temperature-sensitive pressure relief mechanism, which is configured to be able to melt when the internal temperature of the collection cavity 11b provided with the third pressure relief mechanism 1104 reaches a threshold; and/or the third pressure relief mechanism 1104 may be a pressure-sensitive pressure relief mechanism, which is configured to be able to be broken when the internal air pressure of the collection cavity 11b provided with the third pressure relief mechanism 1104 reaches a threshold.

It should be understood that, in order to further improve the discharge efficiency of the discharge of the emissions, the collection cavity 11b may be provided in other ways, for example, the collection cavity 11b may be enlarged, so as to improve the efficiency of discharging. Specifically, Fig. 10 illustrates another cross-sectional schematic diagram of the battery 10 of an embodiment of the present application, wherein the cross-section shown in Fig. 10 is perpendicular to the second direction Y As an example, the cross-section shown in Fig. 10 may be in the same direction as the cross-section shown in Figs. 8 and 9.

As shown in Fig. 10, the electrical cavity 11a includes a fourth wall 1102 intersecting with the third wall 1101, the fourth wall 1102 being of a hollow structure and being in communication with the interior of the third wall 1101 so that the interior of the third wall 1101 and the interior of the fourth wall 1102 form at least part of the collection cavity 11b. Comparing Fig. 10 with Figs. 7 to 9, it can be seen that the interior of the third wall 1101 in Figs. 7 to 9 is used to form the collection cavity 11b, and the third wall 1101 intersects with the fourth wall 1102 but is not internally communicated; whereas the interior of the fourth wall 1102 in Fig. 10 is of a hollow structure and the interior of the third wall 1101 is in communication with the interior of the fourth wall 1102, which, compared to the embodiments of Figs. 7 to 9, enlarges the range of the collection cavity 11b, and also extends the range of the second pathway 132, so that the collection cavity 11b can accommodate more emissions, which is also conducive to cooling down the internal emissions, and improving the efficiency of discharging the emissions, thus improving the safety of the battery 10.

It should be understood that, as shown in Fig. 10, a third sub-wall 1102a of the fourth wall 1102 that is far away from the electrical cavity 11a is provided with a fourth pressure relief mechanism 1105, the fourth pressure relief mechanism 1105 being used to discharge emissions passing through the second pathway 132 out of the collection cavity 11b. In order to discharge the emissions in the collection cavity 11b in a timely manner, the third pressure relief mechanism 1104 may be provided on the second sub-wall 1101c; or the fourth pressure relief mechanism 1105 may also be provided on the third sub-wall 1102a, wherein the third sub-wall 1102a is a wall of the fourth wall 1102 that is far away from the electrical cavity 11a. In this way, when the internal pressure or temperature of the collection cavity 11b reaches a threshold, the fourth pressure relief mechanism 1105 is actuated to relieve the internal pressure or temperature of the collection cavity 11b, and then discharge the emissions in the collection cavity 11b out of the box body 11 in a timely manner; and the third sub-wall 1102a is far away from the electrical cavity 11a, then the emissions will not pass through the fourth pressure relief mechanism 1105 into the electrical cavity 11a again, which avoids the influence on components inside the electrical cavity 11a, thus improving the safety of the battery 10.

Optionally, the fourth pressure relief mechanism 1105 of embodiments of the present application may be implemented in a variety of ways. As an example, similar to the way in which the third pressure relief mechanism 1104 of the second sub-wall 1101c is provided, the fourth pressure relief mechanism 1105 may be part of the third sub-wall 1102a, or it may be of a split structure from the third sub-wall 1102a, so as to be secured to the third sub-wall 1102a by means of, for example, welding, which will not be repeated herein for the sake of brevity.

Optionally, the fourth pressure relief mechanism 1105 of embodiments of the present application may be of a variety of possible pressure relief structures, which is not limited in embodiments of the present application. As an example, the fourth pressure relief mechanism 1105 may be a temperature-sensitive pressure relief mechanism, which is configured to be able to melt when the internal temperature of the collection cavity 11b provided with the fourth pressure relief mechanism 1105 reaches a threshold; and/or the fourth pressure relief mechanism 1105 may be a pressure-sensitive pressure relief mechanism, which is configured to be able to be broken when the internal air pressure of the collection cavity 11b provided with the fourth pressure relief mechanism 1105 reaches a threshold.

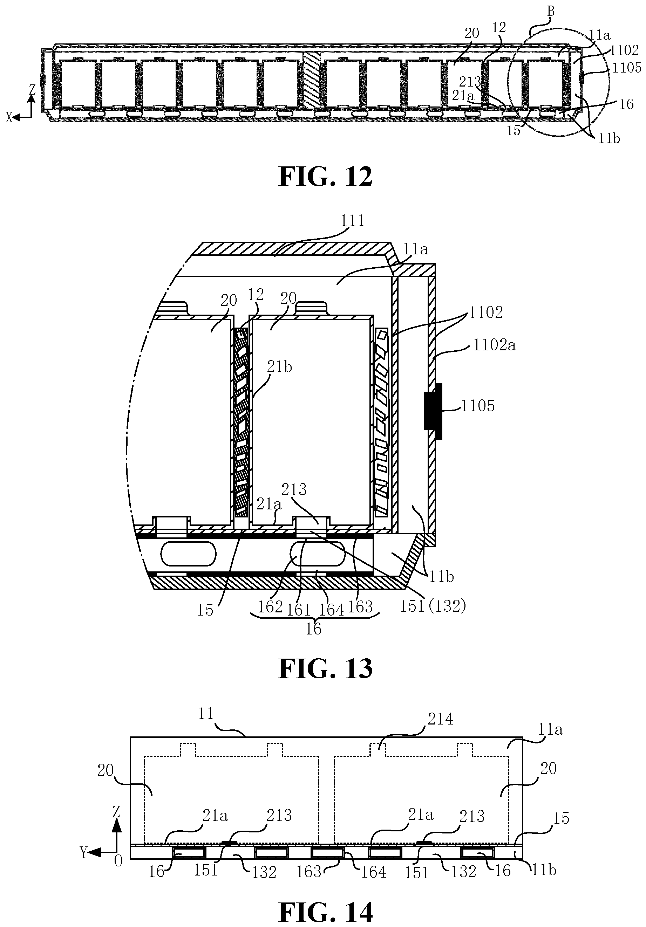

Optionally, the collection cavity 11b of embodiments of the present application can also be formed in other ways. Fig. 11 illustrates an exploded structural schematic diagram of the battery 10 of yet another embodiment of the present application; Fig. 12 illustrates a cross-sectional schematic diagram of the battery 10 of yet another embodiment of the present application, and, for example, the battery 10 depicted in this Fig. 12 may be the battery 10 shown in Fig. 11, and the cross-section shown in Fig. 12 is perpendicular to the second direction y; and Fig. 13 illustrates a partial cross-sectional schematic diagram of the battery 10 of yet another embodiment of the present application, and this Fig. 13 is, for example, an enlarged diagram of the region B in Fig. 12.

As shown in Figs. 11 to 13, the battery 10 of embodiments of the present application further includes: an isolation component 15 attached to the first wall 21a, the isolation component 15 being used to isolate the electrical cavity 11a from the collection cavity 11b. The so-called "isolation" here refers to separation, which may or may not be sealed. Specifically, the isolation component 15 is used to isolate the electrical cavity 11a from the collection cavity 11b. In other words, the electrical cavity 11a for accommodating the battery cells 20 and thermal management components 12 and the collection cavity 11b for collecting emissions are spatially separated from each other to avoid mutual influence between the two.

In embodiments of the present application, the isolation component 15 includes a wall shared by the electrical cavity 11a and the collection cavity 11b. As shown in Figs. 11 to 13, at least part of the isolation component 15 can be directly used as a wall shared by the electrical cavity 11a and the collection cavity 11b, so that the distance between the electrical cavity 11a and the collection cavity 11b can be reduced as much as possible, thus saving the space, and improving the utilization of space of the box body 11.

Optionally, the isolation component 15 of embodiments of the present application may also be a third pressure relief mechanism for regulating the temperature of the battery cell 20. Specifically, the isolation component 15 can be used to accommodate a fluid or a solid-liquid phase change material to regulate the temperature of the battery cell 20. In the case of cooling down the battery cell 20, the isolation component 15 can accommodate a cooling medium to regulate the temperature of the battery cell 20. At this time, the isolation component 15 may also be called a cooling component, a cooling system or a cooling plate.

It should be understood that the isolation of the electrical cavity 11a and the collection cavity 11b by the isolation component 15 in embodiments of the present application may be implemented in a variety of ways. As an example, as shown in Figs. 11 to 13, for the electrical cavity 11a, the box body 11 may include the first hood body with an opening, wherein the opening of the first hood body is capped by the isolation component 15 to form the electrical cavity 11a. In this way, the wall for forming the electrical cavity 11a includes the first hood body and the isolation component 15. Among other things, the first hood body may also be implemented in a variety of ways. As an example, the first hood body may be of a hollow integral structure with one end open; alternatively, the first hood body may also include the first portion 111 as well as the second portion 112 of which two opposite sides each has an opening, wherein the first portion 111 caps the opening at one side of the second portion 112 to form the first hood body with one end open, while the isolation component 15 caps the opening at the other side of the second portion 112 to form the electrical cavity 11a.

For the corresponding collection cavity 11b, as shown in Figs. 11 to 13, the box body 11 further includes: a protective member 113, the protective member 113 being used to form the collection cavity 11b with the isolation component 15. In addition, the protective member 113 can also be used to protect the isolation component 15, which means that the walls of the collection cavity 11b include the protective member 113 and the isolation component 15.

As a further example, unlike the above manner as shown in Figs. 11 to 13, the box body 11 may also include a closed second hood body, wherein the second hood body may be used to form the electrical cavity 11a or, alternatively, by providing the isolation component 13 inside the second hood body, the electrical cavity 11a may be isolated out from the interior of the second hood body, and furthermore, the collection cavity 11b may also be isolated out. Here, this second hood body may also be implemented in a variety of ways. As an example, the second hood body may include a third portion and a fourth portion, wherein the fourth portion has an opening on one side to form a semi-closed structure and the isolation component 13 is disposed inside the fourth portion, and wherein the third portion caps the opening of the fourth portion to form the closed second hood body.

In embodiments of the present application, the isolation component 15 is provided with a second pressure relief region 151, the second pressure relief region 151 being used to form at least part of the second pathway 132. When the first pressure relief mechanism 213 of the battery cell 20 is actuated, the emissions discharged through the first pressure relief mechanism 213 can pass through the second pressure relief region 151 and enter the collection cavity 11b, thereby avoiding damage of the emissions to other battery cells 20 in the electrical cavity 11a, avoiding thermal diffusion, and improving the safety of the battery 10.

Optionally, in embodiments of the present application, the second pressure relief region 151 may be implemented in a variety of ways. As an example, as shown in Figs. 11 to 13, the second pressure relief region 151 is a second through hole penetrating through the thickness direction of the isolation component 15, and the second pathway 132 includes the second through hole. The second pressure relief region 151 being provided as a second through hole, on the one hand, facilitates machining, and on the other hand, the second through hole can provide a deformation space for actuation of the second pressure relief region 151, and when the first pressure relief mechanism 213 is actuated, the emissions are rapidly discharged to the collection cavity 11b through the second through hole, so as to improve the efficiency of discharging the emissions, thereby improving the safety of the battery 10.

As a further example, the second pressure relief region 151 is a second weak region, the second weak region being used to be broken when the first pressure relief mechanism 213 is actuated, so as to form at least part of the second pathway 132. If the second pressure relief region 151 is provided as the second weak region, the second weak region can be broken when the first pressure relief mechanism 213 is activated, so as to allow emissions to pass through the second weak region into the collection cavity 11b. In this way, when the first pressure relief mechanism 213 is not actuated, for example, during normal use of the battery 10, the second weak region can cause the collection cavity 11b to be in a relatively sealed state, which can effectively protect the first pressure relief mechanism 213 from failure due to damage by external forces. Moreover, when the first pressure relief mechanism 213 is actuated, the strength of the second weak region is smaller than the strength at other regions of the isolation component 15 other than the second pressure relief region 151, so that the second weak region is susceptible to being broken to allow emissions from the battery cell 20 provided with the first pressure relief mechanism 213 to pass through the second weak region and to be discharged out of the electrical cavity 11a, e.g., pass through the second weak region into the collection cavity 11b.

Optionally, the second weak region of the isolation component 15 may be implemented in a variety of ways. As an example, the isolation component 15 is provided with a groove opposite to the first pressure relief mechanism 213, wherein this groove is recessed in a direction away from the first pressure relief mechanism 213, so as to provide a deformation space for the first pressure relief mechanism 213, and the bottom wall of the groove may form this second weak region.

Optionally, the second weak region may also be formed on the isolation component 15 as the second pressure relief region 151 in other ways, for example, by providing a score on the isolation component 15 to form this second weak region, and so on, which is not specifically limited in the present application.

Optionally, with reference to the aforementioned manner of disposing the first support member 14, a second support member 16 may be provided in the collection cavity 11b of embodiments of the present application. Specifically, the battery 10 further includes: a second support member 16 provided in the collection cavity 11b, the second support member 16 being used to improve the anti-pressure strength of the collection cavity 11b. It should be understood that the second support member 16 is provided in the collection cavity 11b, wherein the collection cavity 11b may refer to the collection cavity 11b in the embodiments as shown above in Figs. 7 to 10, and it may, for example, refer to the collection cavity 11b formed by the hollow third wall 1101; alternatively, the collection cavity 11b may also refer to the collection cavity 11b in the embodiments as shown in Figs. 11 to 13, i.e., the collection cavity 11b isolated by the isolation component 14, and embodiments of the present application are not limited thereto. For ease of description, the following description is mainly based on the collection cavity 11b in the embodiments as shown in Figs. 11 to 13 as an example, but the relevant description is also applicable to the collection cavity 11b in the embodiments as shown in Figs. 7 to 10. As an example, the first sub-wall 1101a of the third wall 1101 may correspond to the isolation component 15, which will not be repeated herein for the sake of brevity.

The second support member 16 is provided in the collection cavity 11b, and compared to the collection cavity 11b of the hollow cavity structure, the collection cavity 11b provided with the second support member 16 has a better anti-pressure strength because the second support member 16 functions to provide support in the collection cavity 11b. In other words, when an external pressure acts on the battery 10, the collection cavity 11b provided with the second support member 16 can resist most or even all of the external pressure, thereby reducing or eliminating the influence of the external pressure on components such as the battery cells 20 and the thermal management components 12 in the electrical cavity 11a, thus enhancing the anti-pressure performance and safety performance of the battery 10.

In some application scenarios, the battery 10 may be installed in the chassis of an electric vehicle and provide power for the traveling of the electric vehicle. Specifically, the collection cavity 11b of the battery 10 is oriented towards the chassis of the electric vehicle with respect to the electrical cavity 11a, and the electric vehicle may be subjected to undesirable situations such as bumps and flying stones impacts during traveling, which may cause impacts and bottom ball strikes to the chassis of the electric vehicle and even the battery 10 mounted on the chassis. With the technical solutions of embodiments of the present application, the second support member 16 in the collection cavity 11b can provide good anti-impact and anti-bottom ball strike functions, reduce or eliminate the impact on the battery 10 caused by the undesirable conditions encountered by the electric vehicle during driving, and enhance the anti-pressure performance and safety performance of the battery 10, thereby further improving the safety performance of the electric vehicle.

In addition, compared to the hollow collection cavity 11b, the second support member 16 may also be used to form at least part of the second pathway 132, so as to prolong the discharge path for the emissions in the collection cavity 11b, reduce the temperature thereof after they are discharged out of the box body 11, thus further enhancing the safety performance of the battery 10 and the electric device in which it is located.

Optionally, similar to the manner in which the first support member 14 is provided, the shape, number, size, material and other parameters of the second support member 16 of embodiments of the present application can be flexibly set according to the actual application. As an example, the relevant descriptions of the above parameters of the first support member 14 are all applicable to the second support member 16, which will not be repeated herein for the sake of brevity. As an example, embodiments of the present application are mainly described with the strip-like second support member 16 as shown in Figs. 11 to 13 as an example.

In embodiments of the present application, this second support member 16 may form at least part of the second pathway 132 in a variety of ways. As an example, the second support member 16 may be structured such that the second support member 16 itself forms at least part of the second pathway 132; or the second pathway 132 for passage of emissions may be formed between the second support member 16 and the cavity wall of the collection cavity 11b; or if the number of second support members 16 is multiple, the second pathway 132 for passage of emissions may also be formed between the multiple second support members 16.

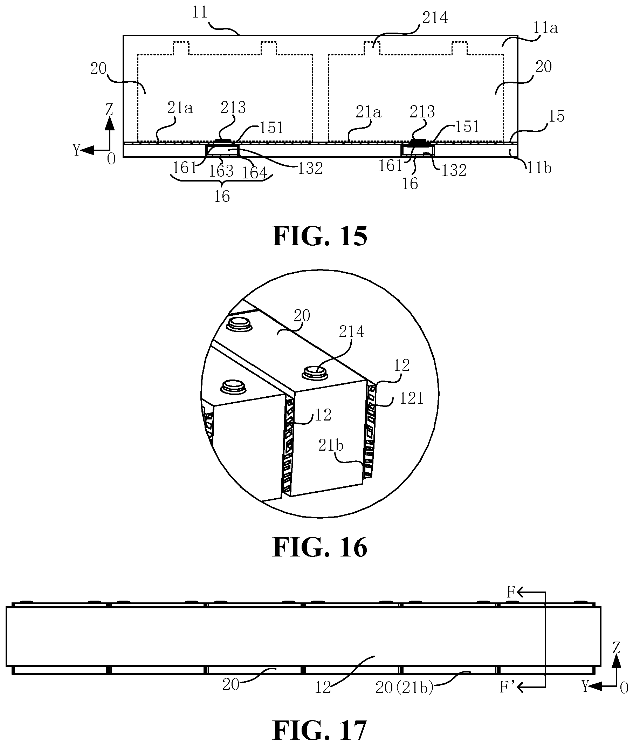

Figs. 14 and 15 respectively illustrate several possible cross-sectional schematic diagrams of the battery 10 of embodiments of the present application. As an example, the Figs. 14 and 15 may be several possible partial cross-sectional schematic diagrams of the battery 10 shown in Fig. 11. Specifically, in Fig. 11, the battery 10 includes multiple battery cells arranged along the second direction Y As an example, Fig. 11 is illustrated with 4 battery cells 20 being included as an example, while Figs. 14 and 15 are illustrated with only two battery cells 20 arranged along the second direction Y as an example. Additionally, the cross-section shown in Fig. 12 is perpendicular to the second direction Y, while the cross-sections shown in Figs. 14 and 15 are perpendicular to the first direction X, wherein the first direction X is perpendicular to the second direction Y. As an example, this first direction X may be the direction in which each second support member 16 extends, or the axial direction of each second support member 16, but embodiments of the present application are not limited thereto.

As shown in Fig. 14, the second support member 16 is provided in correspondence with a region of the isolation component 15 other than the second pressure relief region 151, so as to form at least part of the second pathway 132 outside of the second support members 16. If the second support member 16 is provided in correspondence with the region of the isolation component 15 other than the second pressure relief region 151, emissions discharged sequentially through the first pressure relief mechanism 213 and the second pressure relief region 151 are discharged to the outside of the second support member 16, thereby forming at least part of the second pathway 132 outside of the second support member 16. As an example, at least part of the second pathway 132 may be formed between multiple second support members 16 or between the second support member 16 and the wall of the collection cavity 11b, so that the emissions are directionally discharged.

With the technical solutions of embodiments of the present application, the second support member 16 being provided in correspondence with the region of the isolation component 15 other than the second pressure relief region 151 avoids the influence of the second support member 16 on the first pressure relief mechanism 213 and the second pressure relief region 151. As an example, this can avoid blockage by the second support member 16 of emissions from the inside of the battery cell 20 that are discharged via the first pressure relief mechanism 213 and the second pressure relief region 151, allowing them to be discharged from the electrical cavity 1 1a in a timely manner and collected by the collection cavity 11. Therefore, the second support member 16 provided based on embodiments of the present application will not affect the safety performance of the battery cell 20 while improving the anti-pressure strength of the collection cavity 11b.

Optionally, as shown in Fig. 14, the second support member 16 abuts against the region of the isolation component 15 other than the second pressure relief region 151. Specifically, the second support member 16 can directly or indirectly contact the region of the isolation component 15 other than the second pressure relief region 151, so as to ensure that the second support member 16 functions to provide good support to the collection cavity 11b. As an example, in the height direction Z of the box body 11, the second support member 16 may be provided below the isolation component 15 to support the isolation component 15 and the battery cell 20 disposed on the other side of the isolation component 15.

Optionally, as shown in Fig. 14, the battery 10 includes multiple second support members 16 provided at intervals, at least part of the second pathway 132 being formed between the multiple second support members 16. Since the battery 10 usually includes multiple battery cells 20, multiple second support members 16 can be correspondingly provided at intervals in regions of the collection cavity 11b that correspond to the multiple battery cells 20, so that at least part of the second pathway 132 can be formed between the multiple second support members 16, and the emissions can be discharged to between the multiple second support members 16 after being discharged through the first pressure relief mechanism 213 and second pressure relief region 151, so as to realize directional discharging.

Optionally, as an example, as shown in Fig. 14, for each battery cell 20, one or the second support member 16 may be provided correspondingly according to the size and position of that battery cell 20; and for the multiple battery cells 20 arranged along the second direction Y, one and the same second support member 16 may be provided correspondingly between two adjacent battery cells 20, wherein the direction of extension of that second support member 16 is the first direction X, which means that two rows of battery cells 20 extending along the first direction X can share one and the same second support member 16. In this way, by setting the second support member 16 correspondingly between two adjacent rows of battery cells 20, it is possible to use a lower number of second support members 16, which can both facilitate the mounting and reduce the weight of the battery 10 while providing a good support effect.

Optionally, as another embodiment, as shown in Fig. 15, the second support member 16 is provided with a third open hole 161, the third open hole 161 being provided in correspondence with the second pressure relief region 151 so that emissions passing through the second pressure relief region 151 are discharged through the third open hole 161. In this way, the emissions of the battery cell 20 are discharged through the first pressure relief mechanism 213 and the second pressure relief region 151 and enter the third open hole 161, and the directional discharging of the emissions can be realized by reasonably arranging the position of the third open hole 161.

As an example, if the second support member 16 is of a solid structure, the third open hole 161 may be a through hole penetrating through the second support member 16, so that the second support member 16 itself forms at least part of the second pathway 132.

As a further example, as shown in Fig. 15, the second support member 16 is of a hollow structure, and the second pressure relief region 151 is in communication with the interior of the second support member 16 through the third open hole 161, so as to form at least part of the second pathway 132 inside the second support member 16. Specifically, the second support member 16 is of a hollow structure, for example, the second support member 16 may be of a tubular structure, then the third open hole 161 may be a through hole penetrating through the tubular wall of the second support member 16, for example, the third open hole 161 may penetrate through the tubular wall of the second support member 16 that is close to the isolation component 15. The third open hole 161 is provided opposite to the first pressure relief mechanism 213 and is also provided opposite to the second pressure relief region 151, and will not hinder the actuation of the first pressure relief mechanism 213, nor will it hinder the passage of the emissions through the second pressure relief region 151. In this way, while the second support member 16 fulfills the support function, the third open hole 161 of the second support member 16 also facilitates the reception of emissions of the battery cell 20 that are discharged sequentially via the first pressure relief mechanism 213 and the second pressure relief region 151, and the emissions can be collected to the interior of the second support member 16 after passing through the third open hole 161, and the third open hole 161 and the second support member 16 can be used for at least part of the second pathway 132, so that the emissions can be directionally discharged, thereby preventing emissions from affecting the components in the electrical cavity 11a.

It should be understood that the cross-sectional area of the third open hole 161 is not smaller than the area of the second pressure relief region 151, so as to further enhance the good passage effect of the third open hole 161 on emissions and avoid blockage by the third open hole 161 of the emissions discharged from the second pressure relief region 151 from entering the second pathway 132.

Optionally, as shown in Fig. 15, the multiple battery cells 20 arranged along the first direction X may be correspondingly provided with one and the same strip-shaped second support member 16, and each second support member 16 of the strip-shaped structure is correspondingly provided below the first pressure relief mechanisms 213 of each row of battery cells 20, and also correspondingly provided below multiple second pressure relief regions 151 of the isolation component 15 arranged along the first direction X, then it is possible to use a lower number of second support members 16 that are easy to mount to achieve a good support effect.

In the above embodiments of the present application, as shown in Figs. 11 to 15, the second support member 16 abuts against the isolation component 15 and/or the protective member 113. In this way, the second support member 16 can function to provide support for the isolation component 15 and/or the protective member 113 to improve the overall anti-pressure strength of the isolation component 15 and/or the protective member 113, and in particular when the second support member 16 abuts against the isolation component 15 and/or the protective member 113 at the same time, it can improve the overall anti-pressure strength of the isolation component 15 and/or the protective member 113 at the same time to prevent the external pressure from affecting the collection cavity 11b, and can also prevent the external pressure from affecting components such as battery cells 20 in the electrical cavity 11a.

Optionally, a connecting face 163 of the second support member 16 abuts against the isolation component 15 and/or the protective member 113, and a non-connecting face 164 of the second support member 16 is provided with a fourth open hole 162, so as to form at least part of the second pathway 132 outside the second support member 16. Specifically, the connecting face 163 of the second support member 16 is a face that contacts the isolation component 15 and/or the protective member 113, and on the contrary, the non-connecting face 164 of the second support member 16 is a face of the second support member 16 that does not contact the isolation component 15 and does not contact the protective member 113, and the non-connecting face 164 of the second support member 16 may be provided with the fourth open hole 162 to form at least part of the second channel 132 in the second support member 16, so as to increase the discharge path for the passage of emissions of the battery cell 20.

Specifically, whether at least part of the second pathway 132 is formed outside the second support member 16 or at least part of the second pathway 132 is formed inside the second support member 16, the non-connecting face 164 of the second support member 16 may be used to form the wall of the at least part of the second pathway 132, then the provision of the fourth open hole 162 on the non-connecting face 164 of the second support member 16 can allow gases in the emissions in the second pathway 132 to be discharged, while the region of the non-connecting face 164 of the second support member 16 that is not provided with the fourth open hole 162 can be used to block solids in the emissions.

As an example, the fourth open hole 162 of the second support member 16 may be used for passage of gases and/or liquids in the emissions, while other regions of the second support member 16 may be used for blockage of solids in the emissions. As mentioned above, the emissions from the battery cell 20 include, but are not limited to: electrolyte solution, dissolved or split positive and negative electrode plates, separator fragments, high-temperature and high-pressure gases produced from reactions, sparks, and the like, all of which are high-temperature substances. Among other things, if high-temperature positive and negative electrode plates, high-temperature separator fragments, sparks, and other solid substances are discharged directly through the discharge valve to the outside of the box body 11, this will pose a great safety hazard. With the technical solutions of embodiments of the present application, the fourth open hole 162 can allow the passage of high-temperature gases and/or high-temperature liquids in the emissions, while other regions of the second support member 16 block high-temperature solids in the emissions. Then, the fourth open hole 162 of the second support member 16 filters the high-temperature solids in the emissions and blocks the high-temperature solids in the interior of the second channel 132, so as to prevent the high-temperature solids in the emissions from being discharged and thus causing safety hazards, thereby enhancing the safety of the battery 10 and the electrical device in which it is located.

Optionally, in embodiments of the present application, the size of the third open hole 161 and/or the size of the fourth open hole 162 can be flexibly set according to the actual application. As an example, the sizes of the third open hole 161 and the fourth open hole 162 may be different or the same. As an example, the size of the third open hole 161 is larger than that of the fourth open hole 162, so that the third open hole 161 with a larger size can allow the smooth passage of the emissions discharged via the first pressure relief mechanism 213 without blocking the discharge of the emissions, while the fourth open hole 162 with a smaller size can play a filtering role, which means that the fourth open hole 162 allows the passage of the high-temperature gases and/or high-temperature liquids in the emissions, and the second support member 16 blocks the high-temperature solids in the emissions, so as to prevent the high-temperature solids in the emissions from being discharged out of the box body 11 and thus causing safety hazards, thereby enhancing the safety of the battery and the electrical device in which it is located.

Optionally, in embodiments of the present application, the shape of the third open hole 161 and/or the shape of the fourth open hole 162 can be flexibly set according to the actual application. As an example, the shapes of the third open hole 161 and the fourth open hole 162 may be the same or different. As an example, the shape of the third open hole 161 can be consistent with that of the second pressure relief region 151, so as to facilitate the smooth and timely passage of the emissions; while the shape of the fourth open hole 162 is generally set to be rectangular or circular to facilitate machining.

Optionally, in embodiments of the present application, the number of the third open holes 161 and/or the number of the fourth open holes 162 can be flexibly set according to the actual application. As an example, the numbers of the third open holes 161 and the fourth open holes 162 may be the same or different. As an example, the number of the third open holes 161 may be consistent with that of the corresponding first pressure relief mechanisms 213 or second pressure relief regions 151, so that the third open holes 161 are in one-to-one correspondence with the first pressure relief mechanisms 213 or in one-to-one correspondence with the second pressure relief regions 151; and the number of the second open holes 141 may be flexibly set according to the actual application.

It should be understood that for the collection cavity 11b isolated by the isolation component 15, the discharge efficiency of the discharge of the emissions can be further improved by enlarging the collection cavity 11b. Specifically, as shown in Figs. 12 and 13, the electrical cavity 11a includes a fourth wall 1102 intersecting with the isolation component 15, and the fourth wall 1102 is of a hollow structure, so that the interior of the fourth wall 1102 forms at least part of the collection cavity 11b. That is, at least part of the collection cavity 11b can be formed between the isolation component 15 and the protective member 113, and at the same time, for the fourth wall 1102 which at least partially intersects with the isolation component 15, the fourth wall 1102 can be set to be of a hollow structure, so that the interior of the fourth wall 1102 is in communication with the collection cavity 11b between the isolation component 15 and the protective member 113, thereby expanding the range of the collection cavity 11b, which in turn extends the range of the second pathway 132, so that the collection cavity 11b can accommodate more emissions, thus also facilitating the cooling down of the internal emissions and improving the efficiency of discharging the emissions, which in turn improves the safety of the battery 10.

It should be understood that a fourth sub-wall 1102a of the fourth wall 1102 that is far away from the electrical cavity 11a is provided with a fourth pressure relief mechanism 1105, the fourth pressure relief mechanism 1105 being used to discharge emissions passing through the second pathway 132 out of the collection cavity 11b. When the internal pressure or temperature of the collection cavity 11b reaches a threshold value, the fourth pressure relief mechanism 1105 provided on the third sub-wall 1102a is actuated to relieve the internal pressure or temperature of the collection cavity 11b, and then discharge the emissions in the collection cavity 11b out of the box body 11 in a timely manner, wherein the third sub-wall 1102a is a wall of the fourth wall 1102 far away from the electrical cavity 11a. Moreover, since the third sub-wall 1102a is far away from the electrical cavity 11a, the emissions will not enter the electrical cavity 11a again through the fourth pressure relief mechanism 1105, thus avoiding the influence on the components inside the electrical cavity 11a and improving the safety of the battery 10.

The discharge pathway 13 of embodiments of the present application has been described above with reference to the drawings, and the thermal management component 12 of embodiments of the present application will be described below with reference to embodiments.

It should be understood that the thermal management component 12 of embodiments of the present application may be attached to the second wall 21b of the battery cell 20, wherein this second wall 21b may be any wall of the battery cell 20.

As an example, in combination with the above embodiments, Fig. 16 illustrates a partial schematic diagram of the battery 10 according to embodiments of the present application. As an example, the Fig. 16 may be a partial enlarged diagram of the partial region C of the battery 10 shown in Fig. 2, or the Fig. 16 may also be a partial enlarged diagram of the partial region D of the battery 10 shown in Fig. 7, or the Fig. 16 may also be a partial enlarged diagram of the partial region E of the battery 10 shown in Fig. 11. As shown in Fig. 16, the second wall 21b is the wall with the largest area of the battery cell 20, so as to increase the contact area between the thermal management component 12 and the battery cell 20 for better regulation of the temperature of the battery cell 20, thus improving the efficiency of warming up or cooling down. Specifically, the battery cell 20 may include multiple walls with equal areas. As an example, the shell 21 of the battery cell 20 is a cuboid, then the battery cell 20 includes two walls of equal and the largest area that are provided opposite to each other, then the second wall 21b may be any one of them. For ease of description, embodiments of the present application will be described below mainly by taking the second wall 21b being any one of the walls of the battery cell 20 that have the largest area as an example.

In embodiments of the present application, the battery 10 includes multiple rows of battery cells 20 arranged along a first direction, each row of battery cells 20 of the multiple rows of battery cells 20 including at least one said battery cell 20 arranged along a second direction, with the first direction being perpendicular to the second direction and the second wall 21b. In this way, arranging the multiple battery cells 20 inside the battery 10 in an array manner facilitates assembly of the battery 10 and can also improve the utilization of space of the multiple battery cells 20 inside the battery 10. Here, since the first direction X is perpendicular to the second wall 21b, when the thermal management component 12 is attached to the second wall 21b, the first direction X is also perpendicular to the thermal management component 12.

Optionally, as shown in the drawings of the above embodiments, the thermal management component 12 is attached to the second wall 21b of at least one battery cell 20 of at least one row of battery cells 20 of the multiple rows of battery cells 20. For the multiple rows of battery cells 20, at least one battery cell 20 in at least one row of battery cells 20 is correspondingly provided with a thermal management component 12, and this thermal management component 12 can regulate the temperature of the attached at least one battery cell 20. In this way, there exists at least one thermal management component 12 in the battery 10, and each thermal management component 12 can regulate the temperature for at least one battery cell 20.

In embodiments of the present application, the battery cell 20 includes two said second walls 21b provided opposite to each other along the first direction, and at least one row of battery cells 20 of the multiple rows of battery cells 20 is provided, at two sides along the first direction, respectively with the thermal management components 12 attached to two said second walls 21b of at least one said battery cell 20. The existence of at least one row of battery cells 20 in the multiple rows of battery cells 20 satisfies the following condition: for any row of battery cells 20 in the at least one row of battery cells 20, that row of battery cells 20 includes two second walls 21b provided opposite to each other along the first direction X, and the two second walls 21b are each correspondingly provided with a thermal management component 12, which means that the row of battery cells 20 is sandwiched between the two thermal management components 12. Thus, the two thermal management components 12 can regulate the temperature for the row of battery cells 20 simultaneously, which can improve the efficiency of temperature regulation and improve the safety of the battery 10. As an example, if each row of battery cells 20 in the multiple rows of battery cells 20 in the battery 10 is correspondingly provided with two thermal management components 12, the efficiency of temperature regulation can be greatly improved. As an example, in the case of thermal runaway of the battery cells 20, it is possible to reduce the temperature more effectively, avoid thermal diffusion, and improve the safety of the battery 10.

In embodiments of the present application, one and the same thermal management component 12 is provided between at least two adjacent rows of battery cells 20 of the multiple rows of battery cells 20. In this way, the existence of two adjacent rows of battery cells 20 in the multiple battery cells 20 satisfies the following condition: one and the same thermal management component 12 is provided between the two rows of battery cells 20, so as to facilitate the machining and assembly of the battery 10. As an example, along the first direction X, there may be part of the battery cells 20 that satisfy the following condition: one and the same thermal management component 12 is provided between two adjacent rows of battery cells 20; and there may also be part of the battery cells 20 that satisfy the following condition: the thermal management component 12 is not provided between two adjacent rows of battery cells 20, thus improving the utilization of space in the battery 10. As a further example, as shown in the drawings for the above embodiments, the thermal management components 12 may also be provided between every two adjacent rows of battery cells 20 in the multiple rows of battery cells 20 so that each battery cell 20 corresponds to at least two of the thermal management components 12, thereby improving the effect of temperature regulation.

It should be understood that the number of the thermal management components 12 in the battery 10 of embodiments of the present application can be set according to the actual application. As an example, the number of the thermal management components 12 in the battery 10 can be selected according to the size and number of the battery cells 20.

As an example, the battery 10 includes multiple thermal management components 12 arranged along the first direction X, and by increasing the number of thermal management components 12, the efficiency of temperature regulation can be improved.

As a further example, the multiple said thermal management components 12 are provided at intervals along the first direction X, so that at least one battery cell 20 is provided between two adjacent thermal management components 12, thus avoiding mutual attachment between the multiple thermal management components 12, which can not only improve the utilization of space of the battery 10, but also improve the efficiency of temperature regulation.

In embodiments of the present application, the thermal management component 12 is provided with a heat exchange channel accommodating a heat exchange medium, the heat exchange channels of the multiple said thermal management components 12 being in communication with each other. In this way, the multiple thermal management components 12 are in communication with each other. On the one hand, this facilitates management and control, and improves the integration and safety of the battery 10; and on the other hand, when the temperatures of some of the thermal management components 12 in the battery 10 vary greatly, heat exchange can be realized through the heat exchange channels so as to make the temperature difference between the multiple thermal management components 12 small, thereby improving the efficiency of temperature regulation. Alternatively, each thermal management component 12 may be provided with multiple heat exchange channels, wherein the multiple heat exchange channels are provided at intervals along the height direction Z to increase the heat exchange area between the thermal management component 12 and the battery cell 20, thus improving the efficiency of temperature regulation.

It should be understood that, in embodiments of the present application, the contact area of each thermal management component 12 with the second wall 21b of the battery cell 20 may be set according to the actual application, wherein this contact area refers to the area of the region in which the thermal management component 12 exchanges heat with the second wall 21b of the battery cell 20, and the contact herein may refer to a direct contact between the thermal management component 12 and the second wall 21b, or it may also refer to an indirect contact between the thermal management component 12 and the second wall 21b by means of a thermally conductive adhesive, a thermally conductive pad, or the like. As an example, the ratio of the thickness D of the thermal management component 12 along the first direction X to the area proportion S has a range of values of [0.5 mm, 200 mm], the area proportion S being the ratio of the area of the second wall 21b that is in contact with the thermal management component 12 to the area of the second wall 21b.

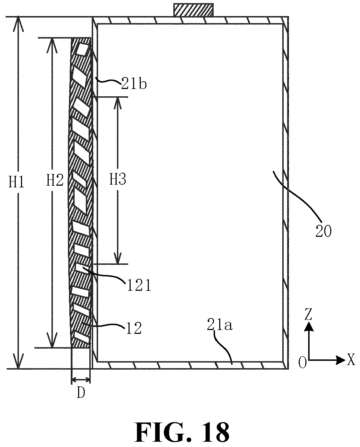

Fig. 17 illustrates a schematic diagram of any row of battery cells 20 of a battery 10 and a correspondingly provided thermal management component 12 of an embodiment of the present application. As an example, the row of battery cells 20 in this Fig. 17 may be any row of battery cells 20 included in the battery 10 shown in Fig. 2, the battery 10 shown in Fig. 7, or the battery 10 shown in Fig. 11. Fig. 18 illustrates a partial cross-sectional schematic diagram of a battery 10 of an embodiment of the present application. As an example, Fig. 18 may be a cross-sectional schematic diagram of the battery 10 along the F-F' direction described in Fig. 17. Since each thermal management component 12 may correspond to multiple battery cells 20, for ease of illustration, as shown in Figs. 17 and 18, embodiments of the present application are illustrated with any thermal management component 12 as an example, and with any battery cell 20 in contact with that thermal management component 12 as an example.

As shown in Figs. 17 and 18, in embodiments of the present application, at least part of the region included in the thermal management component 12 may be in contact with the second wall 21b, which means that part of the region included in the thermal management component 12 may not be in contact with the second wall 21b. Specifically, taking the height direction Z of the battery cell 20 as an example, the height H1 of the second wall 21b may be greater than or equal to or smaller than the height H2 of the thermal management component 12, while the height H3 of the region of the thermal management component 12 that is in contact with the second wall 21b may be smaller than or equal to the height H1 of the second wall 21b, and the height H3 of the region of the thermal management component 12 that is in contact with the second wall 21b may be smaller than or equal to the height H2 of the thermal management component 12 Correspondingly, the area of the second wall 21b may be greater than or equal to or smaller than the area of the thermal management component 12, while the area of the region of the thermal management component 12 that is in contact with the second wall 21b may be smaller than or equal to the area of the second wall 21b, and the area of the region of the thermal management component 12 that is in contact with the second wall 21b may be smaller than or equal to the area of the thermal management component 12 such that at least part of the region of the thermal management component 12 is in contact with at least part of the region of the second wall 21b.

It should be understood that since the thermal management component 12 may correspond to multiple battery cells 20, the area of the thermal management component 12 above represents the area of the thermal management component 12 that corresponds to one battery cell 20. As an example, as shown in Figs. 17 and 18, this thermal management component 12 may correspond to six battery cells 20, then the area of the thermal management component 12 above represents: the total area of the surface of the thermal management component 12 that faces the second wall 21b of the battery cell 20 divided by six, i.e., the area of the thermal management component 12 that corresponds to one battery cell 20.

Since the thermal management component 12 may be partially in contact with the second wall 21b, the range of values for the area proportion S of embodiments of the present application may be set to [0.1, 1] so that at least part of the region of the thermal management component 12 is in contact with the second wall 21b. Moreover, the larger the area proportion S is, the better the effect of temperature regulation is.

Optionally, in embodiments of the present application, the thickness D of the thermal management component 12 may refer to an average thickness of the thermal management component 12, or it may refer to an average thickness of a region of the thermal management component 12 that corresponds to, or in contact with, the second wall 21b of the battery cell 20, and embodiments of the present application are not limited thereto. As an example, in order to facilitate machining, the thermal management component 12 of embodiments of the present application is typically of a plate-like structure of uniform thickness.

In embodiments of the present application, the range of values for the thickness D of the thermal management component 12 may be typically set to [0.5 mm, 20 mm]. If the thickness D is set too small, the thermal management component 12 is difficult to machine, and the strength is too small, so that it is prone to fracture during assembly, thus reducing the efficiency of machining the battery 10. On the contrary, if the thickness D is set too large, the thermal management component 12 takes up more space, reducing the utilization of space of the battery 10, and thus reducing the energy density of the battery 10. Therefore, the thickness D of the thermal management component 12 should not be set too large or too small.

It should be understood that the value of D/S of embodiments of the present application should not be set too large or too small either. If the D/S is set too small, if the area proportion S takes a certain value, the thickness D of the thermal management component 12 is too small, the thermal management component 12 is difficult to machine, and the strength is too small, so that it is prone to fracture during assembly, thus reducing the efficiency of machining the battery 10. On the contrary, if the D/S is set too large, on the one hand, the thickness D of the thermal management component 12 may be large, then the thermal management component 12 occupies a large space, which reduces the utilization of space of the battery 10, and also the energy density of the battery 10, and may also affect the power demand of the battery 10; and on the other hand, the area proportion S may be too small, which means that the contact area between the thermal management component 12 and the second wall 21b of the battery cell 20 is too small, then it will result in a poor efficiency of temperature regulation.

Therefore, in embodiments of the present application, the range of values for the ratio of the thickness D of the thermal management component 12 to the area proportion S may generally be set to [0.5 mm, 200 mm]. As an example, the ratio of the thickness D of the thermal management component 12 to the area proportion S may be equal to 0.5 mm, 1 mm, 2 mm, 3 mm, 4 mm, 5 mm, 10 mm, 20 mm, 30 mm, 40 mm, 50 mm, 60 mm, 70 mm, 80 mm, 90 mm, 100 mm, 120 mm, 140 mm, 160 mm, 180 mm, or 200 mm. As a further example, the ratio of the thickness D of the thermal management component 12 to the area proportion S may also be set to other values. As an example, the range of values for this ratio may be set to [0.5 mm, 4 mm] or [1 mm, 4 mm].

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery (10), comprising:
a battery cell (20), a first wall (21a) of the battery cell (20) being provided with a first pressure relief mechanism (213);
a thermal management component (12) for regulating the temperature of the battery cell (20), wherein the thermal management component (12) is attached to a second wall (21b) of the battery cell (20), the second wall (21b) being different from the first wall (21a) and the area of the second wall (21b) being greater than or equal to that of the first wall (21a); and
a discharge pathway (13) configured to be capable of getting in communication with the interior of the battery cell (20) via the first pressure relief mechanism (213) when the first pressure relief mechanism (213) is actuated, so that emissions of the battery cell (20) are discharged to the discharge pathway.

2. The battery (10) according to claim 1, wherein the battery (10) further comprises:
a box body (11), wherein the box body (11) comprises an electrical cavity (11a), the electrical cavity (11a) being used to accommodate the battery cell (20) and the thermal management component (12).

3. The battery (10) according to claim 2, wherein the discharge pathway (13) comprises a first pathway (131), the first pathway (131) being used to discharge the emissions discharged from the first pressure relief mechanism (213) to the electrical cavity (11a).

4. The battery (10) according to claim 3, wherein the electrical cavity (11a) comprises a third wall (1101) opposite to the first wall (21a), at least part of the first pathway (131) being positioned between the first wall (21a) and the third wall (1101).

5. The battery (10) according to claim 4, wherein the battery (10) further comprises:
a first support member (14), the first support member (14) being provided between the first wall (21a) and the third wall (1101), and the first support member (14) being used to form at least part of the first pathway (131).

6. The battery (10) according to claim 5, wherein the first support member (14) is provided in correspondence with a region of the first wall (21a) other than the first pressure relief mechanism (213), so as to form at least part of the first pathway (131) outside the first support member (14).

7. The battery (10) according to claim 6, wherein the first support member (14) abuts against the region of the first wall (21a) other than the first pressure relief mechanism (213).

8. The battery (10) according to claim 6 or 7, wherein the battery (10) comprises a plurality of the first support members (14) provided at intervals, at least part of the first pathway (131) being formed between the plurality of the first support members (14).

9. The battery (10) according to claim 5, wherein the first support member (14) is provided with a first open hole (141), the first open hole (141) being provided in correspondence with the first pressure relief mechanism (213) so that the emissions passing through the first pressure relief mechanism (213) are discharged through the first open hole (141).

10. The battery (10) according to claim 9, wherein the first support member (14) is of a hollow structure, and the first pressure relief mechanism (213) is in communication with the interior of the first support member (14) through the first open hole (141), so as to form at least part of the first pathway (131) inside the first support member (14).

11. The battery (10) according to claim 9 or 10, wherein the cross-sectional area of the first open hole (141) is not smaller than the area of the first pressure relief mechanism (213).

12. The battery (10) according to any one of claims 9 to 11, wherein the first support member (14) abuts against the first wall (21a) and/or the third wall (1101).

13. The battery (10) according to claim 12, wherein a connecting face (143) of the first support member (14) abuts against the first wall (21a) and/or the third wall (1101), and a non-connecting face (144) of the first support member (14) is provided with a second open hole (142), so as to form at least part of the first pathway (131) outside the first support member (14).

14. The battery (10) according to any one of claims 4 to 13, wherein there is a gap between the first wall (21a) and the third wall (1101), the gap being used to form at least part of the first pathway (131).

15. The battery (10) according to any one of claims 4 to 14, wherein the third wall (1101) and/or a fourth wall (1102) are/is provided with a second pressure relief mechanism (1103), the second pressure relief mechanism (1103) being used to discharge the emissions passing through the first pathway (131) out of the electrical cavity (11a), and the fourth wall (1102) being a wall of the electrical cavity (11a) that intersects with the third wall (1101).

16. The battery (10) according to any one of claims 2 to 15, wherein the discharge pathway (13) comprises a second pathway (132), the second pathway (132) being used to discharge the emissions discharged from the first pressure relief mechanism (213) out of the electrical cavity (11a).

17. The battery (10) according to claim 16, wherein the box body (11) further comprises:
a collection cavity (11b), the collection cavity (11b) being used to collect the emissions from the battery cell (20) through the second pathway (132) when the first pressure relief mechanism (213) is actuated.

18. The battery (10) according to claim 17, wherein the electrical cavity (11a) comprises a third wall (1101) opposite to the first wall (21a), the third wall (1101) being of a hollow structure so that the interior of the third wall (1101) forms at least part of the collection cavity (11b).

19. The battery (10) according to claim 18, wherein a first sub-wall (1101a) of the third wall (1101) that faces the first wall (21a) is provided with a first pressure relief region (1 101b), the first pressure relief region (1101b) being provided opposite to the first pressure relief mechanism (213), and the first pressure relief region (1 101b) being used to form at least part of the second pathway (132).

20. The battery (10) according to claim 19, wherein the first pressure relief region (1101b) is a first through hole penetrating through the thickness direction of the first sub-wall (1101a), and the second pathway (132) comprises the first through hole.

21. The battery (10) according to claim 19, wherein the first pressure relief region (1101b) is a first weak region on the first sub-wall (1101a), the first weak region being used to be broken when the first pressure relief mechanism (213) is actuated, so as to form at least part of the second pathway (132).

22. The battery (10) according to any one of claims 19 to 21, wherein a second sub-wall (1 101c) of the third wall (1101) is provided with a third pressure relief mechanism (1104), the third pressure relief mechanism (1104) being used to discharge the emissions passing through the second pathway (132) out of the collection cavity (11b), and the second sub-wall (1101c) being different from the first sub-wall (1101a).

23. The battery (10) according to any one of claims 18 to 22, wherein the electrical cavity (11a) comprises a fourth wall (1102) intersecting with the third wall (1101), the fourth wall (1102) being of a hollow structure and being in communication with the interior of the third wall (1101) so that the interior of the third wall (1101) and the interior of the fourth wall (1102) form at least part of the collection cavity (11b).

24. The battery (10) according to claim 17, wherein the battery (10) further comprises:
an isolation component (15) attached to the first wall (21a), the isolation component (15) being used to isolate the electrical cavity (11a) from the collection cavity (11b).

25. The battery (10) according to claim 24, wherein the isolation component (15) is provided with a second pressure relief region (151), the second pressure relief region (151) being used to form at least part of the second pathway (132).

26. The battery (10) according to claim 25, wherein the second pressure relief region (151) is a second through hole penetrating through the thickness direction of the isolation component (15), and the second pathway (132) comprises the second through hole.

27. The battery (10) according to claim 25, wherein the second pressure relief region (151) is a second weak region, the second weak region being used to be broken when the first pressure relief mechanism (213) is actuated, so as to form at least part of the second pathway (132).

28. The battery (10) according to any one of claims 24 to 27, wherein the battery (10) further comprises:
a second support member (16) provided in the collection cavity (11b), the second support member (16) being used to improve the anti-pressure strength of the collection cavity (11b).

29. The battery (10) according to claim 28, wherein the second support member (16) is provided in correspondence with a region of the isolation component (15) other than the second pressure relief region (151), so as to form at least part of the second pathway (132) outside the second support member (16).

30. The battery (10) according to claim 29, wherein the second support member (16) abuts against the region of the isolation component (15) other than the second pressure relief region (151).

31. The battery (10) according to claim 28, wherein the second support member (16) is provided with a third open hole (161), the third open hole (161) being provided in correspondence with the second pressure relief region (151) so that the emissions passing through the second pressure relief region (151) are discharged through the third open hole (161).

32. The battery (10) according to claim 31, wherein the second support member (16) is of a hollow structure, and the second pressure relief region (151) is in communication with the interior of the second support member (16) through the third open hole (161), so as to form at least part of the second pathway (132) inside the second support member (16).

33. The battery (10) according to claim 31 or 32, wherein the cross-sectional area of the third open hole (161) is not smaller than the area of the second pressure relief region (151).

34. The battery (10) according to any one of claims 28 to 33, wherein the box body (11) further comprises:
a protective member (113), the protective member (113) being used to form the collection cavity (11b) with the isolation component (15).

35. The battery (10) according to claim 34, wherein the second support member (16) abuts against the isolation component (15) and/or the protective member (113).

36. The battery (10) according to claim 35, wherein a connecting face (163) of the second support member (16) abuts against the isolation component (15) and/or the protective member (113), and a non-connecting face (164) of the second support member (16) is provided with a fourth open hole (162), so as to form at least part of the second pathway (132) outside the second support member (16).

37. The battery (10) according to any one of claims 24 to 36, wherein the electrical cavity (11a) comprises a fourth wall (1102) intersecting with the isolation component (15), the fourth wall (1102) being of a hollow structure so that the interior of the fourth wall (1102) forms at least part of the collection cavity (11b).

38. The battery (10) according to claim 23 or 37, wherein a third sub-wall (1102a) of the fourth wall (1102) that is far away from the electrical cavity (11a) is provided with a fourth pressure relief mechanism (1105), the fourth pressure relief mechanism (1105) being used to discharge the emissions passing through the second pathway (132) out of the collection cavity (11b).

39. The battery (10) according to any one of claims 1 to 38, wherein the second wall (21b) is a wall of the battery cell (20) that has the largest area.

40. The battery (10) according to any one of claims 1 to 39, wherein the battery (10) comprises multiple rows of battery cells (20) arranged along a first direction, each row of battery cells (20) of the multiple rows of battery cells (20) comprising at least one said battery cell (20) arranged along a second direction, with the first direction being perpendicular to the second direction and the second wall (21b).

41. The battery (10) according to claim 40, wherein the thermal management component (12) is attached to the second wall (21b) of at least one said battery cell (20) of at least one row of battery cells (20) of the multiple rows of battery cells (20).

42. The battery (10) according to claim 41, wherein the battery cell (20) comprises two said second walls (21b) provided opposite to each other along the first direction, and at least one row of battery cells (20) of said multiple rows of battery cells (20) is provided, at two sides along said first direction, respectively with said thermal management components (12) attached to two said second walls (21b) of at least one said battery cell (20).

43. The battery (10) according to any one of claims 40 to 42, wherein one and the same said thermal management component (12) is provided between at least two adjacent rows of battery cells (20) of the multiple rows of battery cells (20).

44. The battery (10) according to any one of claims 40 to 43, wherein the battery (10) comprises multiple said thermal management components (12) arranged along the first direction.

45. The battery (10) according to claim 44, wherein the multiple said thermal management components (12) are provided at intervals along the first direction.

46. The battery (10) according to claim 44 or 45, wherein the thermal management component (12) is provided with a heat exchange channel accommodating a heat exchange medium, the heat exchange channels of the multiple said thermal management components (12) being in communication with each other.

47. The battery (10) according to any one of claims 1 to 46, wherein a ratio D/S of the thickness D of the thermal management component (12) along the first direction to an area proportion S has a range of values of [0.5 mm, 200 mm], the first direction being perpendicular to the second wall (21b), and the area proportion S being a ratio of the area of the second wall (21b) that is in contact with the thermal management component (12) to the area of the second wall (21b).

48. The battery (10) according to claim 47, wherein the D/S has a range of values of [1 mm, 100 mm].

49. An electrical device, comprising:
a battery (10) according to any one of claims 1 to 48, the battery (10) being used to provide electrical energy for the electrical device.
